(19) Europäisches Patentamt / European Patent Office / Office européen des brevets

(11) **EP 4 518 507 A1**

(12) **EUROPEAN PATENT APPLICATION**
published in accordance with Art. 153(4) EPC

(43) Date of publication:
05.03.2025 Bulletin 2025/10

(21) Application number: 23758509.6

(22) Date of filing: 28.04.2023

(51) International Patent Classification (IPC):
$H04W\ 72/12^{(2023.01)}$    $H04W\ 72/11^{(2023.01)}$
$H04W\ 72/21^{(2023.01)}$    $H04W\ 72/231^{(2023.01)}$
$H04W\ 72/232^{(2023.01)}$    $H04W\ 72/04^{(2023.01)}$
$H04L\ 1/18^{(2023.01)}$

(52) Cooperative Patent Classification (CPC):
H04L 1/18; H04W 72/04; H04W 72/11;
H04W 72/12; H04W 72/21; H04W 72/231;
H04W 72/232

(86) International application number:
PCT/KR2023/005843

(87) International publication number:
WO 2023/211234 (02.11.2023 Gazette 2023/44)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.04.2022 US 202263336202 P
28.04.2022 US 202263336218 P
28.04.2022 US 202263336237 P

(71) Applicant: LG ELECTRONICS, INC.
Seoul 07336 (KR)

(72) Inventors:
• **LEE, Youngdae**
Seoul 06772 (KR)
• **BAE, Duckhyun**
Seoul 06772 (KR)
• **KIM, Jaehyung**
Seoul 06772 (KR)
• **YANG, Suckchel**
Seoul 06772 (KR)
• **KIM, Seonwook**
Seoul 06772 (KR)

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING SEMI-PERSISTENT SCHEDULING PDSCH IN WIRELESS COMMUNICATION SYSTEM**

(57) A method and apparatus for transmitting and receiving a semi-persistent scheduling PDSCH in a wireless communication system is disclosed. A method according to an embodiment of the present disclosure may include receiving, from a base station, respective configuration information related to one or more SPS configurations; receiving, from the base station, respective DCI for activating the one or more SPS configurations; and receiving an SPS PDSCH from a resource determined by information related to a resource in which the SPS PDSCH for the one or more SPS configurations is next transmitted.

FIG.13

| Receive respective configuration information related to one or more semi-persistent scheduling configurations | S1301 |
| Receive downlink control information | S1302 |
| Receive a semi-persistent scheduling PDSCH | S1303 |

EP 4 518 507 A1

**Description**

[Technical Field]

The present disclosure relates to a wireless communication system, and in more detail, relates to a method and an apparatus of transmitting and receiving semi-persistent scheduling (SPS) physical downlink shared channel (PDSCH) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for adjusting transmission/reception timing of an SPS PDSCH for an SPS configuration or activating a deactivated SPS.

In addition, a technical object of the present disclosure is to provide a method and apparatus for transmitting and receiving an SPS PDSCH for a plurality of connection/associated SPS configurations.

In addition, a technical object of the present disclosure is to provide a method and apparatus of transmitting and receiving an SPS PDSCH using a multi transmission reception point (M-TRP) for one or more SPS configurations.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, respective configuration information related to one or more semi-persistent scheduling (SPS) configurations; receiving, from the base station, respective downlink control information (DCI) for activating the one or more SPS configurations; and receiving an SPS physical downlink shared channel (PDSCH) from a resource determined by information related to a resource in which the SPS PDSCH for the one or more SPS configurations is next transmitted. The UE may not receive the SPS PDSCH until before a resource determined by the information related to a resource to which the SPS PDSCH is next transmitted.

A method performed by a base station in a wireless communication system according to an additional aspect of the present disclosure may include: transmitting, to a user equipment (UE), respective configuration information related to one or more semi-persistent scheduling (SPS) configurations; transmitting, to the UE, respective downlink control information (DCI) for activating the one or more SPS configurations; and transmitting an SPS physical downlink shared channel (PDSCH) from a resource determined by information related to a resource in which the SPS PDSCH for the one or more SPS configurations is next transmitted. The base station may not transmit the SPS PDSCH until before a resource determined by the information related to a resource to which the SPS PDSCH is next transmitted.

[Technical Effects]

According to an embodiment of the present disclosure, optimized SPS resource allocation is possible in consideration of jitter of downlink traffic.

In addition, according to an embodiment of the present disclosure, it is possible to quickly respond to transmission of downlink traffic (e.g., virtual reality (VR)/extended reality (XR) video traffic) according to a motion of a UE.

In addition, according to an embodiment of the present disclosure, it is possible to prevent power consumption of a UE.

In addition, according to an embodiment of the present disclosure, transmission resources can be efficiently managed by preventing unnecessary SPS transmission.

In addition, according to an embodiment of the present disclosure, signaling overhead may be reduced.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 illustrates a structure/pattern of a group of pictures.
FIG. 9 illustrates a plurality of SPS configurations according to an embodiment of the present disclosure.
FIG. 10 illustrates a single semi-persistent scheduling configuration according to one embodiment of the present disclosure.
FIG. 11 illustrates a scheduling method for a plurality of transport blocks based on downlink control information according to an embodiment of the present disclosure.
FIG. 12 illustrates a signaling procedure between a network and a UE for a method for transmitting and receiving a semi-persistent scheduling PDSCH according to an embodiment of the present disclosure.
FIG. 13 is a diagram illustrating an operation of a UE for a method for transmitting and receiving a semi-persistent scheduling PDSCH according to an embodiment of the present disclosure.
FIG. 14 is a diagram illustrating an operation of a base station for a method for transmitting and receiving a semi-persistent scheduling PDSCH according to an embodiment of the present disclosure.
FIG. 15 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc.

between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator

- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

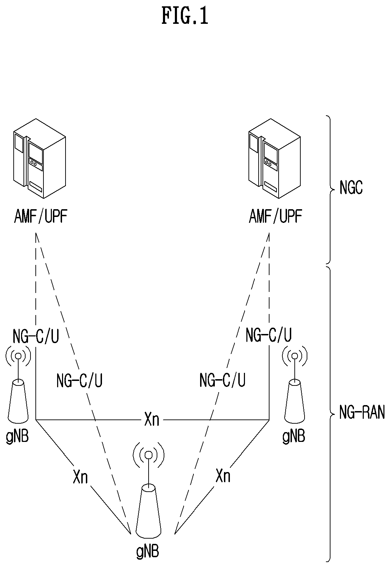

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

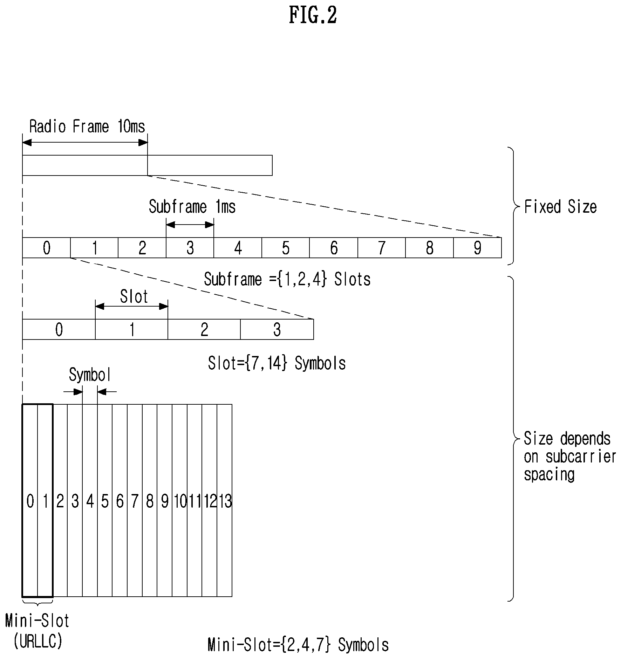

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,\,offset})T_c$ than a corresponding downlink frame in a corresponding terminal starts. For a subcarrier spacing configuration $\mu$, slots are numbered in an increasing order of $n_s^{\mu}\in\{0,\ldots,N_{slot}^{subframe,\mu}-1\}$ in a subframe and are numbered in an increasing order of $n_{s,f}^{\mu}\in\{0,\ldots,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

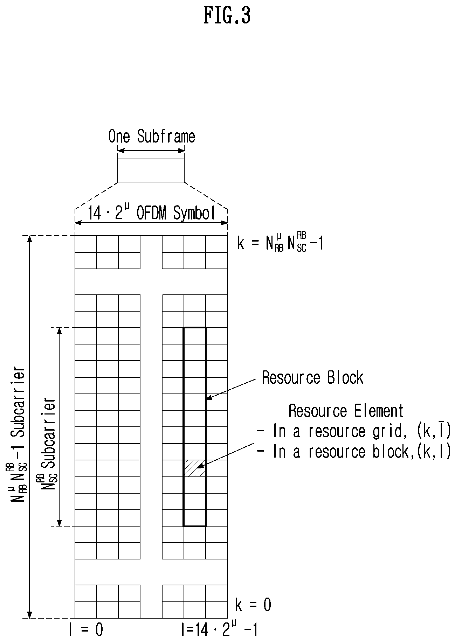

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l') . Here, k=0, ..., $N_{RB}^{\mu}N_{sc}^{RB}$-1 is an index in a frequency domain and l' =0, ..., $2^{\mu}N_{symb}^{(\mu)}$-1 refers to a position of a symbol in a subframe. When referring to a resource element in a slot, an index pair (k,l) is used. Here, l=0, ..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequencyposition of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

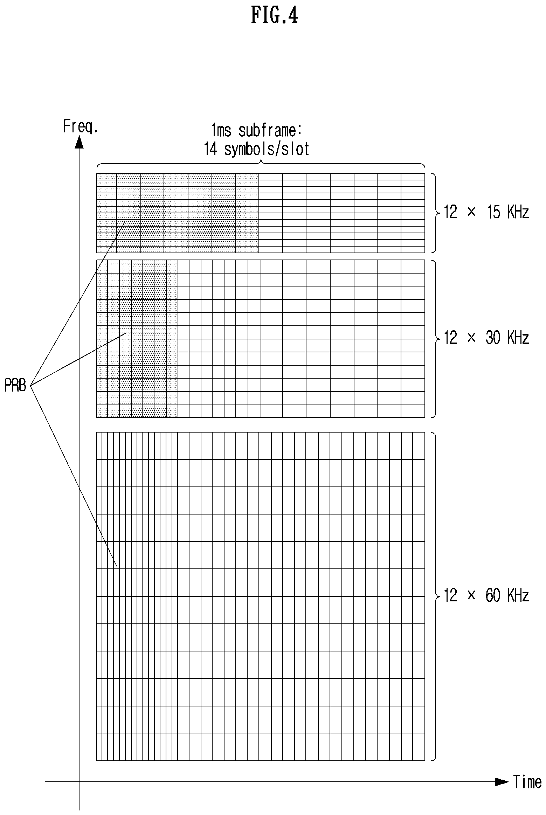

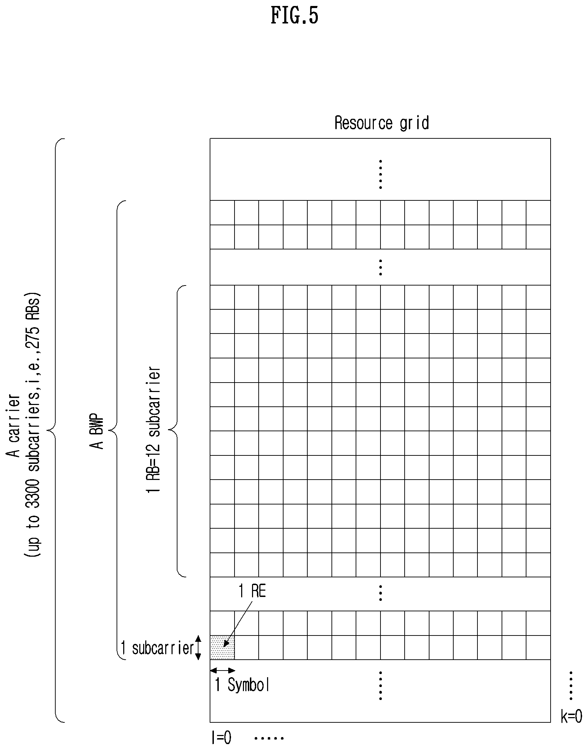

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

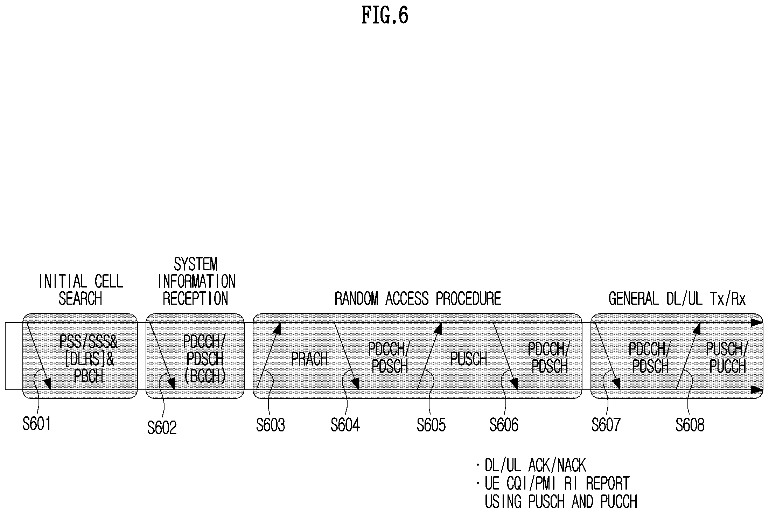

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table **5**]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block (TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission (JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets (CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

Hereinafter, a method for improving reliability in Multi-TRP will be described.

As a transmission and reception method for improving reliability using transmission in a plurality of TRPs, the following two methods may be considered.

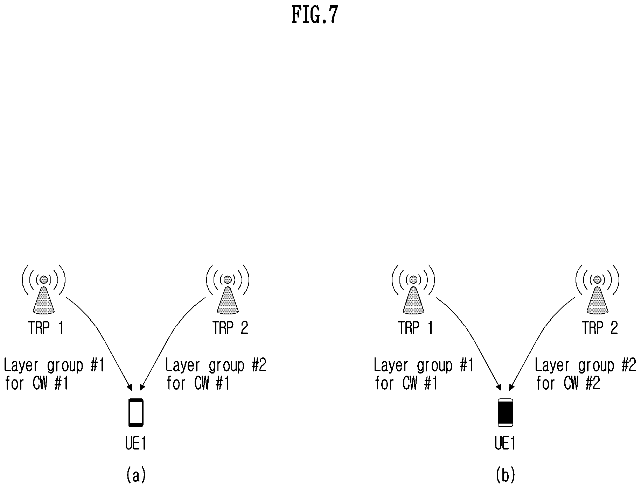

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Multi-TRP scheduled by at least one DCI may be performed as follows:

i) Scheme 1 (SDM): n (n is a natural number) TCI states in a single slot in overlapping time and frequency resource allocation

- Scheme 1a: Each transmission occasion is one layer or set of layers of the same TB, and each layer or set of layers is associated with one TCI and one set of DMRS port(s). A single codeword with one redundancy version (RV) is used for all layers or sets of layers. For a UE, different coded bits are mapped to different layers or sets of layers with specific mapping rules.
- Scheme 1b: Each transmission occasion is one layer or set of layers of the same TB, and each layer or set of layers is associated with one TCI and one set of DMRS port(s). A single codeword with one RV is used for each spatial layer or set of layers. RVs corresponding to each spatial layer or set of layers may be the same or different.
- Scheme 1c: Each transmission occasion is one layer of the same TB having one DMRS port associated with multiple TCI state indices or one layer of the same TB with multiple DMRS ports associated with multiple TCI indices in turn (one by one).
  In schemes 1a and 1c described above, the same MCS is applied to all layers or sets of layers.

ii) Scheme 2 (FDM): n (n is a natural number) TCI states in a single slot in non-overlapping frequency resource allocation. Each non-overlapping frequency resource allocation is associated with one TCI state. The same single/multiple DMRS port(s) is associated with all non-overlapping frequency resource allocations.

- Scheme 2a: A single codeword with one RV is used across an entire resource allocation. For UE, a common RB mapping (mapping of codeword to layer) is applied across all resource allocations.
- Scheme 2b: A single codeword with one RV is used for each non-overlapping frequency resource allocation. RVs corresponding to each non-overlapping frequency resource allocation may be the same or different.
  In scheme 2a, the same MCS is applied to all non-overlapping frequency resource allocations.

iii) Scheme 3 (TDM): n (n is a natural number) TCI states in a single slot in non-overlapping time resource allocation. Each transmission occasion of a TB has one TCI and one RV with time granularity of a mini-slot. All transmission occasion(s) in a slot use a common MCS with the same single or multiple DMRS port(s). An RV/TCI state may be the same or different among transmission occasions.

iv) Scheme 4 (TDM): n (n is a natural number) TCI states in K (n<=K, K is a natural number) different slots. Each transmission occasion of a TB has one TCI and one RV. All transmission occasion(s) across K slots use a common MCS with the same single or multiple DMRS port(s). An RV / TCI state may be the same or different among transmission occasions.

Hereinafter, in the present disclosure, DL MTRP-URLLC means that M-TRPs transmit the same data(e.g., transport block, TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is indicated which QCL RS/type (i.e., a DL TCI (state)) should be used in a layer/time/frequency resource receiving the same data/DCI from a base station. For example, when the same data/DCI is received in resource 1 and resource 2, a DL TCI state used in resource 1 and a DL TCI state used in resource 2 may be indicated. UE may achieve high reliability because it receives the same data/DCI through resource 1 and resource 2. Such DL MTRP URLLC may be applied to a PDSCH/a PDCCH.

Conversely, UL MTRP-URLLC means that M-TRPs receive the same data/UCI from UE by using a different layer/time/frequency resource. For example, TRP 1 receives the same data/UCI from UE in resource 1 and TRP 2 receives the same data/UCI from UE in resource 2 and shares received data/UCI through a backhaul link connected between TRPs. UE configured with a UL MTRP-URLLC transmission method transmits the same data/UCI by using a different layer/time/frequency resource. Here, UE is indicated which Tx beam and which Tx power (i.e., a UL TCI state) should be used in a layer/time/frequency resource transmitting the same data/DCI from a base station. For example, when the same data/UCI is received in resource 1 and resource 2, a UL TCI state used in resource 1 and a UL TCI state used in resource 2 may be indicated. Such UL MTRP URLLC may be applied to a PUSCH/a PUCCH.

In addition, in methods proposed in the present disclosure, when a specific TCI state (or a TCI) is used (/mapped) in receiving data/DCI/UCI for any frequency/time/space resource, it may mean that a DL estimates a channel from a DMRS by using a QCL type and a QCL RS indicated by a corresponding TCI state in that frequency/time/space resource and receives/demodulates data/DCI to an estimated channel. It may mean that an UL transmits/modulates a DMRS and data/UCI by using a Tx beam and/or Tw power indicated by a corresponding TCI state in that frequency/time/space resource.

The UL TCI state has Tx beam and/or Tx power information of UE and spatial relation information, etc. instead of a TCI state may be configured to UE through other parameter. An UL TCI state may be directly indicated to UL grant DCI or may mean spatial relation information of an SRS resource indicated by an SRI (SRS resource indicator) field of UL grant DCI. Alternatively, it may mean an OL (open loop) Tx power control parameter connected to a value indicated by a SRI field of UL grant DCI (j: an index for open loop parameter Po and alpha(a) (up to 32 parameter value sets per cell), q_d: an index of a DL RS resource for PL (pathloss) measurement (measurement of up to 3 per cell), l: a closed loop power control process index (up to 2 processes per cell)).

On the other hand, it is assumed that MTRP-eMBB means that M-TRPs transmit other data by using a different layer/time/frequency, UE configured with a MTRP-eMBB transmission method is indicated multiple TCI states with DCI and data received by using a QCL RS of each TCI state is different data.

In addition, whether of MTRP URLLC transmission/reception or MTRP eMBB transmission/reception may be understood by UE by separately classifying a RNTI for MTRP-URLLC and a RNTI for MTRP-eMBB and using them. In other words, when CRC masking of DCI is performed by using a RNTI for URLLC, it is considered as URLLC transmission and when CRC masking of DCI is performed by using a RNTI for eMBB, it is considered as eMBB transmission. Alternatively, a base station may configure MTRP URLLC transmission/reception or may configure MTRP eMBB transmission/reception to UE through other new signaling.

In the present disclosure, for convenience of a description, a proposal is applied by assuming cooperative transmission/reception between 2 TRPs, but it may be extended and applied in 3 or more multi-TRP environments and it may be also extended and applied in multi-panel environments. A different TRP may be recognized by UE as a different transmission configuration indication (TCI) state. That is, when UE receives/transmits data/DCI/UCI by using TCI state 1, it means that data/DCI/UCI is received/transmitted from/to TRP 1.

A proposal of the present disclosure may be utilized in a situation where MTRP cooperatively transmits a PDCCH (the same PDCCH is repetitively or partitively transmitted) and some proposals may be utilized even in a situation where MTRP cooperatively transmits a PDSCH or cooperatively receives a PUSCH/a PUCCH.

In addition, in the present disclosure below, the meaning that a plurality of base stations (i.e., MTRP) repetitively transmits the same PDCCH may mean the same DCI is transmitted by a plurality of PDCCH candidates, and it is equivalent with the meaning that a plurality of base stations repetitively transmits the same DCI. The same DCI may mean two DCI with the same DCI format/size/payload. Alternatively, although two DCI have a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception time of DCI. Here, if DCI received at a time of n and DCI received at a time of n+1 represent the same scheduling result to UE, a TDRA field of two DCI is different, and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure below, when a plurality of base stations (i.e., MTRP) divide and transmit the same PDCCH, it may mean that one DCI is transmitted through one PDCCH candidate, but TRP 1 transmits some resources in which the PDCCH candidate is defined and TRP 2 transmits the remaining resources. For example, when TRP 1 and TRP 2 divide and transmit a PDCCH candidate corresponding to an aggregation level m1 + m2, the PDCCH candidate is divided into PDCCH candidate 1 corresponding to aggregation level m1 and PDCCH candidate 2 corresponding to aggregation level m2, and TRP 1 transmits the PDCCH candidate 1 and TRP 2 transmits the PDCCH candidate 2 using different time/frequency resources. After receiving the PDCCH candidate 1 and the PDCCH candidate 2, a UE generates a PDCCH candidate corresponding to aggregation level m1+m2 and attempts DCI decoding.

When the same DCI is divided and transmitted to several PDCCH candidates, there may be two implementation methods.

First, a DCI payload (control information bits + CRC) may be encoded through one channel encoder (e.g., a polar encoder), coded bits obtained as a result may be divided into two TRPs and transmitted. In this case, an entire DCI payload may be encoded in coded bits transmitted by each TRP, or only a part of a DCI payload may be encoded. Second, a DCI payload (control information bits + CRC) may be divided into two (DCI 1 and DCI 2) and each can be encoded through a channel encoder (e.g., polar encoder). Thereafter, two TRPs may transmit coded bits corresponding to DCI 1 and coded bits corresponding to DCI 2, respectively.

In summary, it may be as follows that a plurality of base stations (i.e., MTRP) divide/repeat the same PDCCH and transmit over a plurality of monitoring occasions (MO).

i) it may mean that each base station (i.e., STRP) repeatedly transmits coded DCI bits obtained by encoding all DCI contents of a corresponding PDCCH through each MO; or,

ii) it may mean that coded DCI bits obtained by encoding all DCI contents of a corresponding PDCCH are divided into a plurality of parts, and each base station (i.e., STRP) transmits a different part through each MO; or
iii) it may mean that DCI contents of a corresponding PDCCH are divided into a plurality of parts, and each base station (i.e., STRP) separately encodes different parts and transmits them through each MO.

That is, it may be understood that a PDCCH is transmitted multiple times over several transmission occasions (TO) regardless of repeated transmission or divided transmission of the PDCCH. Here, a TO means a specific time/-frequency resource unit in which a PDCCH is transmitted. For example, if a PDCCH is transmitted multiple times (in a specific resource block (RB)) over slots 1, 2, 3, and 4, a TO may mean each slot, or if a PDCCH is transmitted multiple times (in a specific slot) over RB sets 1, 2, 3, and 4, a TO may mean each RB set, or if a PDCCH is transmitted multiple times over different times and frequencies, a TO may mean each time/frequency resource. In addition, a TCI state used for DMRS channel estimation for each TO may be configured differently, and it may be assumed that TOs in which a TCI state is configured differently are transmitted by different TRPs/panels. When a plurality of base stations repeatedly transmits or dividedly transmits a PDCCH, it means that the PDCCH is transmitted over a plurality of TOs, and the union of TCI states configured in corresponding TOs is configured with two or more TCI states. For example, if a PDCCH is transmitted over TOs 1,2,3,4, TCI states 1,2,3,4 may be configured in each of TOs 1,2,3,4, respectively, which means that TRP i transmits cooperatively a PDCCH in TO i.

For a plurality of TOs indicated to a UE to repeatedly transmit or dividedly transmit a PDCCH/PDSCH/PUSCH/-PUCCH, UL transmits to a specific TRP or DL receives from a specific TRP in each TO. Here, a UL TO (or TO of TRP 1) transmitted to TRP 1 means a TO using the first value among two spatial relations, two UL TCIs, two UL power control parameters and/or two pathloss reference signals (PLRS) indicated to a UE, and a UL TO (or TO of TRP 2) transmitted to TRP 2 means a TO using the second value among two spatial relations, two UL TCIs, two UL power control parameters and/or two PLRSs indicated to a UE. Similarly, for DL transmission, a DL TO (or TO of TRP 1) transmitted by TRP 1 means a TO using the first value among two DL TCI states (e.g., when two TCI states are configured in CORESET) indicated to a UE, and a DL TO (or TO of TRP 2) transmitted by TRP 2 means a TO using the second value among two DL TCI states (e.g., when two TCI states are configured in CORESET) indicated to a UE.

The proposal of the present disclosure can be extended and applied to various channels such as PUSCH/-PUCCH/PDSCH/PDCCH.

The proposal of the present disclosure can be extended and applied to both a case of repeated transmission and a case of divided transmission the channel on different time/frequency/spatial resources.

Downlink semi-persistent scheduling (SPS)

In downlink SPS, persistent scheduling through higher layer signaling (RRC, etc.) and dynamic scheduling of lower layer signaling (DCI, etc.) are combined. Persistent scheduling is used for periodic resource allocation for an initial transmission of a transport block (TB). Dynamic scheduling is used for resource allocation for retransmission when retransmission is required.

A UE may report support of SPS to a base station using a downlinkSPS flag in UE capability information.

For SPS, RRC signaling and physical layer signaling on a PDCCH are combined and used. RRC signaling (e.g., SPS-Config IE) provides a subset of resource allocation information, and additional information is provided by a PDCCH. In addition, a PDCCH is used as a trigger of activation/release.

Table 6 illustrates an example of the SPS-Config IE. SPS-Config IE is used to configure downlink semi-persistent transmission. Multiple downlink SPS configurations in one BWP of a serving cell may be configured.

【Table 6】

```
-- ASN1START
-- TAG-SPS-CONFIG-START

SPS-Config ::=                      SEQUENCE {
    periodicity                     ENUMERATED {ms10, ms20, ms32, ms40, ms64, ms80,
ms128, ms160, ms320, ms640,
                                              spare6, spare5, spare4, spare3,
spare2, spare1},
    nrofHARQ-Processes              INTEGER (1..8),
    n1PUCCH-AN                      PUCCH-ResourceId
OPTIONAL,    -- Need M
    mcs-Table                       ENUMERATED {qam64LowSE}
OPTIONAL,    -- Need S
    ...,
    [[
    sps-ConfigIndex-r16             SPS-ConfigIndex-r16
OPTIONAL,    -- Cond SPS-List
    harq-ProcID-Offset-r16          INTEGER (0..15)
OPTIONAL,    -- Need R
    periodicityExt-r16              INTEGER (1..5120)
OPTIONAL,    -- Need R
    harq-CodebookID-r16             INTEGER (1..2)
OPTIONAL,    -- Need R
    pdsch-AggregationFactor-r16     ENUMERATED {n1, n2, n4, n8 }
OPTIONAL     -- Need S
    ]]
}
```

```
-- TAG-SPS-CONFIG-STOP
-- ASN1STOP
```

In Table 6, the periodicity represents a period of a downlink SPS, which means a time duration between continuous persistent resource allocations. The periodicityExt is used to calculate a period of downlink SPS, and if this parameter does not exist, the periodicity is ignored. An SPS period has different supported values depending on configured subcarrier spacing.

The nrofHARQ-Processes represents a number of a HARQ process configured for downlink SPS. In the case of dynamic resource allocation, a HARQ process identifier is specified in DCI associated with each resource allocation. However, in downlink SPS, an identifier of a HARQ process is determined based on the nrofHARQ-Processes value and the periodicity value.

The n1PUCCH-AN indicates a HARQ resource of a PUCCH for downlink SPS. An actual PUCCH-Resource is configured according to the value of n1PUCCH-AN, and based on this, a PUCCH resource for transmitting a HARQ ACK to a base station are identified.

The mcs-Table indicates an MCS table used by a UE for downlink SPS.

The pdsch-AggregationFactor indicates the number of repetitions of an SPS PDSCH and may have one value among {1,2,4,8}. If this field does not exist, a UE applies pdsch-AggregationFactor of PDSCH-Config. That is, a UE repeatedly receives the same downlink data/transport block (TB) in consecutive slots.

When a scheduled PDSCH is received without corresponding PDCCH transmission using SPS-config, the same symbol allocation is applied over consecutive slots according to the configured repetition number (pdsch-Aggregation-Factor). That is, a UE repeatedly receives a downlink TB in the same symbol over several consecutive slots according to the configured number of repetitions. When repetitive transmission is configured, a PDSCH is limited to a single transmission layer.

In a PDSCH scheduled without corresponding PDCCH transmission using SPS-config, a time duration for reception according to the number of repetitions (pdsch-AggregationFactor) is not greater than a duration derived by a period obtained from SPS-config.

A redundancy version (rv_id) is determined differently for each TO of a TB. In a PDSCH scheduled without corresponding PDCCH transmission using SPS-config, it is assumed that a redundancy version indicated by DCI is 0.

After downlink assignment is configured for SPS, a MAC entity sequentially considers that the Nth (N≥0) downlink assignment is generated within a slot according to Equation 3 below. That is, when SPS is configured, an SPS PDSCH may be transmitted at a transmission occasion/opportunity that satisfies Equation 3 below.

[Equation 3] (*numberOfSlotsPerFrame* × SFN + slot number in the frame) = [(*numberOfSlotsPerFrame* × SFN$_{start\ time}$ + slot$_{start\ time}$) + N × *periodicity* × *numberOfSlotsPerFrame* / 10] modulo (1024 × *numberOfSlotsPerFrame*)

In Equation 3, numberOfSlotsPerFrame represents a number of slots per frame. SFN$_{start\ time}$ and slot$_{start\ time}$ are an SFN and a slot of the first transmission of a PDSCH in which a DL assignment configured for an SPS configuration was (re)initialized, respectively. In other words, SFN$_{start\ time}$ and slot$_{start\ time}$ are an SFN number and a slot number of the first PDSCH allocated based on a TDRA field in DCI, respectively. A configured DL allocation may be configured as a set of periodic SPS PDSCH occasions for an SPS configuration. The periodicity represents a period of DL SPS (see Table 6).

Meanwhile, in the case of dynamic resource allocation on a PDCCH, an HARQ process ID (HARQ process identity) is specified in DCI, whereas in the case of SPS, since DCI is not received before each PDSCH transmission, a HARQ process is calculated according to Equation 4 or 5 below. A base station may configure the number of HARQ processes (e.g., nrofHARQ-Processes) and an offset (e.g., harq-ProcID-Offset) used to derive a HARQ process ID.

If an offset (e.g., harq-ProcID-Offset) used to derive a HARQ process ID is not configured, a UE derives a HARQ process ID associated with a slot in which downlink transmission starts from Equation 4 below. Alternatively, if an offset (e.g., harq-ProcID-Offset) used to derive a HARQ process ID is configured, a UE derives a HARQ process ID associated with a slot in which downlink transmission starts from Equation 5 below.

**【Equation 4】**

$$\text{HARQ Process ID} = [\text{floor} (CURRENT\_slot \times 10 / (numberOfSlotsPerFrame \times periodicity))] \text{ modulo } nrofHARQ\text{-}Processes$$

**【Equation 5】**

$$\text{HARQ Process ID} = [\text{floor} (CURRENT\_slot \times 10 / (numberOfSlotsPerFrame \times periodicity))] \text{ modulo } nrofHARQ\text{-}Processes + harq\text{-}ProcID\text{-}Offset$$

In Equations 4 and 5, nrojHARQ-Processes defines the number of downlink HARQ processes and may have a value from 1 to 8 (see Table 6). nrojHARQ-Processes is used to identify a HARQ process ID for specific PDSCH transmission.

Method for transmitting and receiving a semi-persistent scheduling (SPS) PDSCH

In the present disclosure, when image information of an extended reality (XR) service is transmitted through preconfigured resources such as semi-persistent scheduling (SPS) of the NR wireless communication system, a method for reducing power consumption and increasing efficiency of radio resources while guaranteeing availability and reliability of transmission resources is proposed.

In NR, one or more SPS PDSCHs may be configured for a UE for periodic transmission and reception or low delay time and PDCCH overhead. In each SPS configuration, a configuration/indicated resource may be repeated with a period. That is, initially configured/indicated resource allocation is repeated with a configured periods and a UE can receive downlink transmission from corresponding resources without a separate PDCCH reception process.

Meanwhile, there are various types of data that can be generated in XR. Among these data, it is considered that transmission and reception of sensor and location information and video data of a UE, which are generally reported with a specific period, are transmitted and received in SPS resources. Data generation time (traffic arrival time) for such data is not always constant and jitter may occur due to reasons such as a video encoding time, a sensor measurement time, an operation of a higher layer, or a routing change of a network to be delivered.

If a resource is allocated to a location sufficiently distant in time from an expected traffic generation point in consideration of jitter, etc., availability of a resource can be guaranteed, but a delay time may occur. Conversely, if an SPS resource with a fixed period is allocated at a time of expected data generation, a larger delay may occur due to a waiting time until a next available resource when jitter occurs.

In addition, since some data are generated based on events, it is impossible to accurately determine an actual data generation time, but it is considered to use SPS resources for these data in order to reduce a delay caused by scheduling. In this case, skipping methods in which a sufficient number of resources are allocated in a short period in preparation for data generation, a UE or a base station selectively uses these resources, and other resources are not actually used are conventionally discussed. However, in order to use the method of skipping transmission and reception, it is necessary to consider response signals between a UE and a base station for conforming reception and transmission. If a UE transmits a response signal even for unreceived transmission, a base station needs to always prepare a resource for the UE to transmit a response signal. And, for these resources, considering that the skipping method is based on configuring a sufficiently large number of resources in radio resources, it may occur as a large uplink burden. In addition, considering that these resources can be multiplexed between UEs, a burden of uplink resources should be considered more importantly.

Since securing low latency is essential for a quality of XR service, it is necessary to consider a method of minimizing an effect on latency while reducing an effect of jitter. In order to solve this problem, the present disclosure deals with a method of selectively using some of a plurality of SPS resources configured between a UE and a base station and simplifying and transmitting a response to the used SPS resources at a predetermined location.

A group of pictures (GOP) of video coding may include the following picture types.

An I picture or I frame (i.e., an intra coded picture) (which may also be referred to as a key frame or an i-frame) is a picture that is coded independently of all other pictures. Each GOP starts with a picture of this type (in decoding order).

A P picture or P frame (i.e., a predictive coded picture) includes motion-compensated difference information relative to previously decoded pictures. For example, in older designs such as H.262/MPEG-2 and H.263, each P picture can only refer to one picture, the corresponding picture should precede the P picture in display order and decoding order, and should be an I or P picture. These restrictions do not apply to the new standards H.264/MPEG-4 AVC and HEVC.

A B picture or B frame (bipredictive coded picture) includes motion-compensated difference information relative to previously decoded pictures. For example, in MPEG-1 and older designs such as H.262/MPEG-2, each B-picture can only refer to two pictures, one precedes the B picture in display order and the other follows the B picture, and all referenced pictures should be either I or P pictures. These restrictions do not apply to the new standards H.264/MPEG-4 AVC and HEVC.

A D picture or D frame (direct coded (DC) picture) serves as a fast access indication of a picture for loss robustness or fast-forward. D pictures are used only in MPEG-1 video.

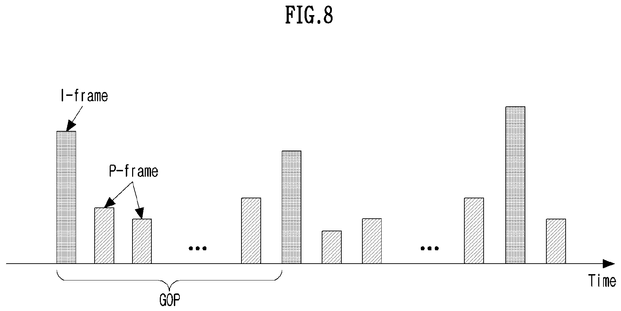

FIG. 8 illustrates a structure/pattern of a group of pictures.

Referring to FIG. 8, an I frame indicates a start of a GOP. This is followed by several P and B frames. In the previous design, an ordering and a reference structure allowed were relatively limited.

A GOP structure is often referred to by two numbers, e.g., M=3, N=12. The first number (M) represents a distance between two anchor frames (I or P). The second number (N) is a GOP size that informs a distance between two full images (I-frames). For example, in the case of M=3 and N=12, a GOP structure is IBBPBBPBBPBBI. Instead of the M parameter, the maximum number of B frames between two consecutive anchor frames may be used.

For example, in a sequence with the pattern IBBBBPBBBBBPBBBBBI, a GOP size (N value) is 15 (a length between two I frames) and a distance (M value) between two anchor frames is 5 (a length between an I frame and a P frame or between two consecutive P frames).

An I frame includes a full image and no additional information is required to reconstruct it. Generally, an encoder use a GOP structure that allows each I frame to be a "clean random access point". Thus, decoding can start cleanly at an I-frame and any errors in a GOP structure are corrected after processing a correct I-frame.

Hereinafter, the present disclosure describes a method proposed based on semi-static downlink SPS radio resources, but this is for convenience of description, the methods proposed in the present disclosure are not limited thereto. Accordingly, those skilled in the art can understand that the methods proposed in the present disclosure can be extended and applied to a radio resource through dynamic scheduling received by a UE. For example, a method in which a UE determines one HARQ-ACK timing for a plurality of allocated downlink radio resources may be applied regardless of an SPS PDSCH or a PDSCH indicated by dynamic scheduling. In addition, the methods proposed in the present disclosure can be applied even when a plurality of radio resources are not semi-statically configured but set through dynamic indication, for example, when a plurality of radio resources are configured at once through DCI. Accordingly, the methods proposed in the present disclosure can be applied to all types of transmission/reception schemes expected by a base station and a UE as long as the principle of the proposed method is not infringed, even if there is no separate explanation. Hereinafter, in the present disclosure, for convenience of description, semi-persistent scheduling (SPS) can be used as a general concept collectively referring to semi-statically configured radio resources (e.g., DL/UL SPS, CG).

In the present disclosure, a transmission occasion/opportunity (TO) means a radio resource (e.g., SPS PDSCH) configured for SPS use. In a transmission occasion, a subject performing transmission (i.e., base station in case of downlink, UE in case of uplink) can attempt transmission in a TO, and a receiver (i.e., UE in case of downlink, base station in case of uplink) can expect transmission in each TO and attempt reception.

Hereinafter, in the present disclosure, an example is described based on the NR system to explain the principle of the proposed method, but the proposed methods are not specifically limited to the transmission and reception scheme of the NR unless otherwise specified. In addition, in the present disclosure, an example is described based on the characteristics and structure of the XR service to explain the principle of the proposed method, but the proposed methods are not specifically limited to supporting the XR service unless otherwise specified. Accordingly, the methods proposed in the present disclosure can be applied to all wireless communication transmission/reception structures and services as long as the principle of the proposed method is not infringed, even if there is no separate explanation.

Hereinafter, the present disclosure proposes a method of adjusting transmission timing of an SPS PDSCH or activating a deactivated SPS according to pose information, etc. provided by a UE or considering jitter of downlink traffic. In addition, a method of quickly reporting pose information through an SR resource or a CG resource is proposed. Through this, it is possible to quickly respond to transmission of downlink VR (virtual reality)/XR (extended reality) video traffic according to a movement of a UE and optimize SPS resource allocation by considering jitter of downlink video traffic.

In addition, the present disclosure proposes a method of preventing unnecessary SPS PDSCH transmission and reception in consideration of a packet data budget (PDB) or delay requirement of a packet transmitted through SPS. Through this, power consumption of a UE can be reduced, and a transmission resource can be efficiently used.

In addition, in the present disclosure, a method of scheduling periodic multiple transport block (TB) transmission with one DCI in case a GOP pattern and jitter occur, and a method of periodically allocating PUCCH resources for this, a method of retransmitting individual TBs based on respective DCI and a method of dropping next PDSCH transmission due to a previous PDSCH transmission failure are proposed. Through this, it is possible to schedule periodic multi-TB transmission with one DCI, enabling optimal dynamic scheduling according to a GOP pattern and reducing PDCCH overhead.

To this end, the method proposed in the present disclosure may include a method of allocating SPS radio resources to a UE by a base station and a method of receiving and transmitting SPS resources. In addition, the method proposed in the present disclosure may include a method of transmitting a HARQ-ACK PUCCH response for an SPS PDSCH reception result and a method of receiving retransmitted DCI of a base station through a PDCCH thereafter. In addition, the method proposed in the present disclosure may include a process in which a UE transmits a signal and a channel for informing its capability and/or service requirement, and a base station receives the signal and the channel.

As the method proposed in the present disclosure, some of the following methods may be selected and applied. In addition, each of the methods proposed in the present disclosure can be operated in an independent scheme without a combination, or one or more methods can be combined and operated in an associated scheme. Some terms, symbols, and sequences used to describe the method proposed in the present disclosure may be substituted with other terms, symbols, and sequences as long as the principles of the present disclosure are maintained.

In the present disclosure, the following SPS configuration activation/deactivation and transmission/reception operation, etc. may be supported. the following SPS configuration, activation/deactivation, transmission/reception operations, etc. can be combined with the methods proposed in this disclosure.

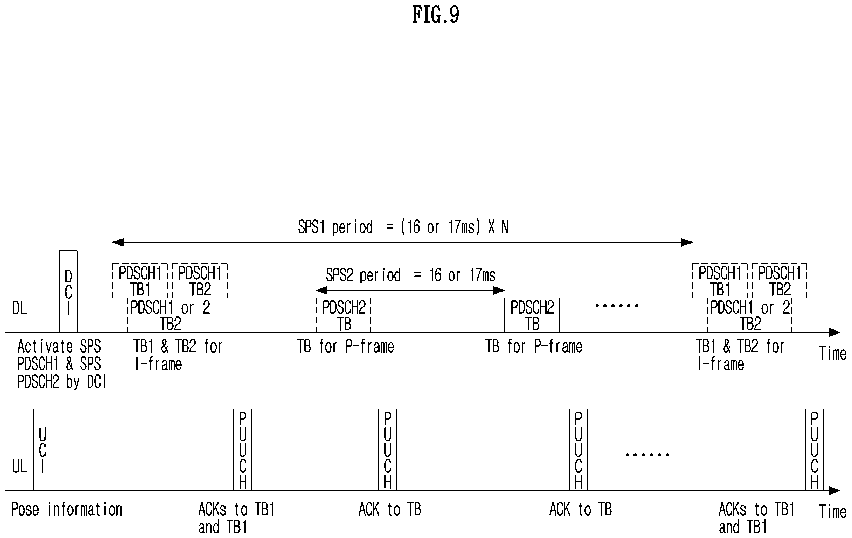

FIG. 9 illustrates a plurality of SPS configurations according to an embodiment of the present disclosure.

- A plurality of SPSs (for example, SPS1 and SPS2 in the case of two SPSs) can be configured as one SPS group with SPS configurations connected/associated with each other, and SPS1 may be configured as a primary SPS, and SPS2 may be configured as a secondary SPS. Here, secondary SPS may be SPS activated or received according to transmission of primary SPS. For example, an SPS configuration for SPS PDSCH 1 in FIG. 9 is a primary SPS configuration, an SPS configuration for SPS PDSCH 2 is a secondary SPS configuration, and the two SPS configurations can be configured as one SPS group.

- Primary SPS and secondary SPS may be configured to different SPS configuration indexes. Alternatively, primary SPS and secondary SPS are configured to the same SPS configuration index, however may be divided into primary/secondary SPS indicators or different sub-indexes by an RRC message, a MAC CE, or DCI.

    i) When DCI indicates SPS1 and also indicates activation, a UE may activate SPS2 at the same time as activating SPS1 or after a predetermined time.

    ii) Alternatively, when DCI indicates both SPS1 and SPS2 and also indicates activation, a UE may activate SPS2 simultaneously with activating SPS1 or after a predetermined time. For example, FIG. 9 illustrates a case in which activation is indicated for both an SPS configuration for SPS PDSCH 1 and an SPS configuration for SPS PDSCH 2 by one DCI. In addition, a case in which an SPS configuration for SPS PDSCH 1 and an SPS configuration for SPS PDSCH 2 are simultaneously activated is exemplified.

Here, DCI may include all different SPS configuration indices for SPS1 and SPS2.

Alternatively, DCI may include an SPS configuration index for SPS1 and indicate a secondary SPS indicator.

Alternatively, DCI may include an SPS configuration index for SPS2 and indicate a primary SPS indicator.

Alternatively, DCI may include an SPS configuration index for SPS1 or SPS2 and may include a sub-index for SPS2 or SPS1.

Alternatively, DCI may indicate a common SPS configuration index for SPS1 and SPS2. For example, among a HARQ process identity (ID) values indicating an SPS configuration index, a value between 1 and 8 is configured as the conventional SPS configuration index (i.e., to indicate a single SPS configuration), and a HARQ process ID value exceeding 8 may be configured as an SPS configuration index indicating a plurality of connected SPSs simultaneously.

Alternatively, DCI may include all different SPS configuration sub-indexes for SPS1 and SPS2.

- A base station may configure different video frame types (e.g., I-frame and P-frame) with different logical channels. Accordingly, through s value of s logical channel identifier (LCID) field included in s sub-header of a MAC protocol data unit (PDU) (i.e., transport block (TB)), a UE can distinguish data for different video frames. Here, a base station may configure different logical channels for different video frame types to be mapped to different SPSs. Here, SPS1 and SPS2 may be mapped to the same or different logical channels.

For example, referring to FIG. 9, different logical channels may be configured/allocated to an I-frame and a P-frame. Also, a logical channel for an I-frame may be mapped to SPS for SPS PDSCH 1, and a logical channel for a P-frame may be mapped to SPS for SPS PDUSCH 2.

- Activation or transmission/reception of SPS2 may be determined depending on whether SPS1 is activated or transmitted/received. Here, activation of SPS2 may be configured to occur simultaneously with or after activation of SPS1.
- A UE can expect SPS2 PDSCH transmission to occur only after SPS1 PDSCH transmission. Accordingly, reception of an SPS2 PDSCH in the next period may be determined depending on whether or not an SPS1 PDSCH is received.
- When an SPS1 PDSCH and an SPS2 PDSCH are transmitted/allocated by TDM or FDM in the same period or a partially overlapping period, when receiving an SPS1 PDSCH, a UE may determine that an SPS2 PDSCH resource are not available or to skip SPS2 PDSCH reception. Alternatively, a UE may deactivate SPS2 or deactivate activated SPS2. For example, as shown in FIG. 9, an SPS configuration for an SPS PDSCH 1 may be configured to a period of N times 16 ms or 17 ms (N is a natural number), and an SPS configuration for an SPS PDSCH 2 may be configured to a period of 16 ms or 17 ms. In addition, an SPS configuration for N SPS PDSCH 2 may overlap within one period of SPS configuration for an SPS PDSCH 1. That is, as shown in FIG. 9, in the first period of an SPS PDSCH 2, an SPS PDSCH 2 and an SPS PDSCH 1 may be allocated as TDM or FDM. In this case, a resource of an SPS PDSCH 2 (PDSCH 2 carrying TB2 for I-frame in FIG. 9) may be determined to be invalid or transmission of an SPS PDSCH 2 may be determined to be skipped.
- When an SPS1 PDSCH and an SPS2 PDSCH are transmitted/allocated by TDM or FDM in the same slot, or when SPS1 PDSCH and SPS2 PDSCH resources overlap, a UE can prioritize SPS1 PDSCH reception regardless of an SPS configuration index of SPS1 and SPS2. That is, in this case, a UE may skip receiving an SPS2 PDSCH resource and receive and decode an SPS1 PDSCH resource. For example, as shown in FIG. 9, an SPS PDSCH 2 (PDSCH 2 carrying TB2 for I-frame in FIG. 9) may be skipped and only an SPS PDSCH 1 resource may be received.
- When a HARQ-ACK (ACK/NACK, A/N or acknowledgment/negative acknowledgment) PUCCH for an SPS1 PDSCH and an A/N PUCCH for an SPS2 PDSCH are allocated to the same slot, a UE may multiplex and transmit a HARQ-ACK for an SPS1 PDSCH and a HARQ-ACK for an SPS2 PDSCH to an A/N PUCCH resource of SPS1, which is primary SPS. Alternatively, a UE may transmit a HARQ-ACK for an SPS1 PDSCH and drop a HARQ-ACK for an SPS2 PDSCH.

Alternatively, a base station and a UE may configure an A/N PUCCH resource for primary SPS, but may not configure an A/N PUCCH resource for secondary SPS.

Alternatively, an A/N PUCCH resource may be configured only for one SPS among primary SPS and secondary SPS.

Alternatively, when both primary SPS and secondary SPS are activated, and both an A/N PUCCH resources for primary SPS and an A/N PUCCH resources for secondary SPS are configured, an A/N PUCCH for secondary SPS can be invalidated. Here, when only primary SPS or only secondary SPS is activated, a HARQ-ACK may be transmitted as an A/N PUCCH resource for activated SPS.

[0164]    - When a base station configures and activates periodic radio resources (e.g., SPS) to a UE, the base station may allocate a plurality of radio resources to the UE within one period. In a plurality of radio resources, the same time/frequency resource allocation in a slot is repeated at regular intervals (e.g., M (M is a natural number) slot) (e.g., radio resources of 3 symbols per slot are repeatedly allocated to the same location), or radio resources having the same length may be consecutively and repeatedly allocated to consecutive symbols with the first radio resource (e.g., radio resources of 3 symbols are then repeatedly allocated). The number of radio resources N (where N is a natural number) may be determined by L1 signaling and/or higher layer signaling. For example, although FIG. 9 illustrates a case in which only one radio resource is allocated to both SPS PDSCH 1 and SPS PDSCH 2 in one period, a plurality of radio resources may be allocated in one period.

[0165]    - A base station/UE may perform transmission using one or a part of a plurality of SPS radio resources in the period according to a traffic pattern. Here, the fastest radio resource capable of transmitting a transport block (TB) including user data may be selected in consideration of a user data generation time of a base station/UE.

In the present disclosure, a base station may activate a plurality of SPSs connected/associated with each other through one DCI or different DCIs. Here, different SPSs may be mapped to the same or different DL cells. In addition, different SPSs may be mapped to the same or different DL bandwidth parts (BWPs). In addition, different SPSs may be mapped to the same or different resource block (RB) sets. For example, when two SPSs are connected/associated, different periodic SPS PDSCH resources for the two SPSs may be allocated to one or more DL cells, one or more DL BWPs, or one or more RB sets.

Embodiment 1: When a plurality of SPS configurations configured in a UE are connected/associated with each other, an SPS PDSCH for each SPS configuration may be transmitted and received as follows.

Here, a plurality of SPS configurations may be mapped to one or more different logical channels, or may be mapped to the same one or more logical channels, or may be mapped to partially overlapping logical channels.

When SPS1 (i.e., SPS Configuration Index 1) (i.e., sps-ConfigIndex) is mapped to a logical channel for an I-frame, SPS2 (i.e., SPS Configuration Index 2) is mapped to both a logical channel for an I-frame and a logical channel for a P-frame, and SPS1 and SPS2 are configured as connected/associated SPSs, a UE may receive different SPS PDSCHs as follows.

In this SPS configuration, a plurality of TBs for an I-frame may be transmitted through SPS PDSCHs for a plurality of SPSs. For example, as shown in FIG. 9, logical channel data for an I-frame may be divided into two TBs and transmitted through PDSCH1 for SPS1 and PDSCH2 for SPS2.

Method 1-1: A UE may determine that SPS2 resources is valid only when there is SPS1 transmission. In other words, when two connected/associated SPS configurations are configured for a UE, and when SPS PDSCH transmission for one of the SPS configurations is received (or when an ACK is transmitted for it), SPS PDSCH resources for another SPS configuration may be available. Here, invalid SPS PDSCH resources may mean that SPS PDSCH resources are not allocated.

That is, it is assumed that PDSCH resources for SPS2 are allocated according to SPS1, when a UE determines that there is SPS1 PDSCH transmission (i.e., received), or when transmitting HARQ-ACK information (e.g., ACK) for SPS PDSCH transmission for SPS1, SPS PDSCH reception for SPS2 may be determined.

Method 1-2: A UE may activate SPS2 only when there is SPS1 transmission. In other words, when two connected/associated SPS configurations are configured for a UE, when SPS PDSCH transmission for one SPS configuration is received (or when an ACK is transmitted for it), the other SPS configuration may be activated.

For example, when a base station indicates activation of both SPS1 and SPS2 with one DCI, a UE may activate SPS1 first. Thereafter, when it is determined that there is transmission of an SPS1 PDSCH or when HARQ-ACK information (e.g., ACK) for an SPS1 PDSCH is transmitted, SPS2 may be activated and an SPS2 PDSCH may be received.

Here, when it is determined that there is no SPS1 PDSCH transmission in a resource to which SPS1 PDSCH transmission is allocated, or when it is determined that there is no SPS1 PDSCH transmission for a certain period of time, or when a NACK is transmitted for SPS1 PDSCH transmission, a UE may determine that SPS2 is deactivated (or may deactivate activated SPS2).

If necessary, even if a base station has already indicated activation of both SPS1 and SPS2 as first DCI, a base station may indicate activation/release of SPS2 as separate second DCI. When two DCIs (first DCI and second DCI) activate the same SPS2, even if SPS2 has already been activated, a UE can activate SPS2 again according to the last received DCI (i.e., second DCI).

Method 1-3: A UE may determine whether to receive an SPS2 PDSCH according to a MAC PDU header or a MAC CE content received through an SPS1 PDSCH. In other words, when two connected/associated SPS configurations are configured for a UE, whether or not to receive an SPS PDSCH for another SPS configuration may be determined according to contents of SPS PDSCH transmission for one SPS configuration. Here, determining whether or not to receive an SPS PDSCH may mean whether SPS PDSCH resources for a corresponding SPS configuration are allocated (i.e., whether it is valid) or whether a corresponding SPS configuration is activated.

For example, an LCID field or a MAC CE of a MAC PDU received through an SPS1 PDSCH may inform (indicate) a start of a GOP pattern, a logical channel corresponding to an I-frame, or connected SPS2 transmission or activation. In this case, a UE may activate deactivated SPS2 and receive an activated SPS2 PDSCH.

Embodiment 2: When a plurality of SPS configurations configured in a UE are connected/associated with each other, an SPS PDSCH for each SPS configuration may be transmitted and received as follows.

Here, a plurality of SPS configurations may be mapped to one or more different logical channels, or may be mapped to the same one or more logical channels, or may be mapped to partially overlapping logical channels.

When, SPS1 (i.e., SPS Configuration Index 1) is mapped to a logical channel for an I-frame, SPS2 (i.e., SPS Configuration Index 2) is mapped to a logical channel for P-frame, and SPS1 and SPS2 are configured as connected/associated SPSs, a UE can receive different SPSs as follows.

In this SPS configuration, a plurality of TBs for an I-frame may be transmitted through a plurality of SPS PDSCHs for SPS1. For example, as shown in FIG. 9, logical channel data for an I-frame may be divided into two TBs and transmitted through different (consecutive) PDSCHls for SPS1.

Method 2-1: SPS PDSCH resources may not be allocated to a specific (one or more) SPS period of SPS2. In other words, when two connected/associated SPS configurations are configured for a UE, SPS PDSCH resources may not be allocated (may be invalid) within one or more specific periods of a specific SPS configuration.

For example, a UE may determine that SPS PDSCH resources allocated to a specific (one or more) SPS period of SPS2 overlapping with SPS1 PDSCH transmission are invalid. And/or, a base station may not allocate SPS PDSCH resources to a specific (one or more) SPS period of SPS2 overlapping with SPS1 PDSCH transmission.

In this method, in order to invalidate or not allocate SPS PDSCH resources of a specific M-th (or one or more) overlapping SPS periods, a mask (i.e., a period in which an SPS PDSCH is not transmitted) may be configured in units of SPS periods. Accordingly, a UE and a base station may invalidate or not allocate SPS PDSCH resources of a specific M-th (or one or more) SPS periods for which a mask is configured.

Method 2-2: SPS2 transmission may be skipped in a (one or more) SPS2 period overlapping SPS1. In other words, when two connected/associated SPS configurations are configured for a UE, SPS PDSCH transmission may be skipped within one or more specific periods of a specific SPS configuration that overlaps with the other SPS configuration. That is, SPS PDSCH resources are allocated in one or more corresponding periods, but SPS PDSCH transmission may be skipped.

A UE may skip PDSCH reception allocated to a specific (one or more) SPS period of SPS2 overlapping with SPS1 PDSCH transmission.

In this method, in order to skip a specific M-th (or one or more) overlapping SPS period, a mask may be configured in units of SPS periods. Accordingly, a UE and a base station may skip SPS PDSCH reception/transmission of a specific M-th (or one or more) SPS period for which a mask is configured.

Here, an ACK may be transmitted as HARQ-ACK information for a skipped SPS PDSCH. Alternatively, a response of HARQ-ACK information for a skipped SPS PDSCH may also be skipped.

Method 2-3: When SPS1 PDSCH transmission is detected in a specific SPS1 period, or when an SPS1 PDSCH is received in a specific SPS1 period, SPS2 PDSCH resource(s) of SPS2 period(s) starting after SPS1 PDSCH transmission/reception may be determined to be valid. Accordingly, a UE can receive SPS2 PDSCH transmission(s) on corresponding valid SPS2 PDSCH resource(s). In other words, when two connected/associated SPS configurations are configured for a UE, if an SPS PDSCH for one SPS configuration is transmitted, an SPS PDSCH may be transmitted within one or more periods for another SPS configuration that starts after transmission of the corresponding SPS PDSCH.

Here, a UE may determine that A/N PUCCH resource(s) are effectively allocated only for SPS2 PDSCH resource(s) of SPS2 period(s) starting after SPS1 PDSCH transmission/reception.

Alternatively, a UE may determine that all A/N PUCCH resources of all SPS2 periods starting after transmission/reception of an SPS1 PDSCH are effectively allocated. In this case, a UE may transmit an ACK for invalid SPS2 PDSCH transmission.

Embodiment 3: When a plurality of SPS configurations configured in a UE are connected/associated with each other, SPS PDSCH transmission for other SPS configurations may be indicated through SPS PDSCH transmission for one SPS configuration.

Here, a plurality of SPS configurations may be mapped to one or more different logical channels, or may be mapped to the same one or more logical channels, or may be mapped to partially overlapping logical channels.

When SPS1 (i.e., SPS Configuration Index 1) is mapped to a logical channel for an I-frame, SPS2 (i.e., SPS Configuration Index 2) is mapped to a logical channel for a P-frame, and SPS1 and SPS2 are configured as connected/associated SPSs, a UE may activate all connected/associated SPSs according to DCI, and transmission of SPS1 PDSCH(s) or SPS2 PDSCH(s) of period N+k (K is a natural number) may be indicated through transmission of an SPS1 PDSCH of period N (N is a natural number) .

In other words, when two connected/associated SPS configurations are configured for a UE, through SPS PDSCH transmission in a specific period of a specific SPS configuration, SPS PDSCH transmission in one or more periods for the corresponding SPS configuration and/or the other SPS configuration may be indicated thereafter.

For example, through a sub-header or a MAC CE of an SPS1 PDSCH of period N, a start of a GOP pattern may be informed, a logical channel corresponding to an I-frame may be indicated, or reception or activation of connected SPS2 may be indicated. In this case, a UE may expect and receive SPS2 PDSCH transmission during the k-th period (k = 1, 2, 3, ...) immediately after receiving an SPS1 PDSCH.

Here, a UE may expect and receive a plurality of SPS2 PDSCH transmissions following the k-th period. For example, if three P-frames are expected to be transmitted right after an I-frame according to information notified by a base station, a UE can expect and receive SPS PDSCH transmission during the k, k+1, k+2-th periods (k=1, 2, 3, ..., M) immediately after SPS1 PDSCH transmission.

In addition, a UE may receive information on a GOP pattern through an RRC message, a MAC CE or a DCI for configuring or activating SPS1 and SPS2.

Alternatively, a MAC CE of an SPS1 PDSCH of period N may indicate a GOP pattern. For example, transmission of three P-frames immediately after an I-frame may be indicated. In this case, a UE may expect and receive SPS PDSCH transmission during the k, k+1, and k+2-th periods (k=1, 2, 3, ...) immediately after SPS1 PDSCH transmission.

Embodiment 4: Information on a start time of an SPS PDSCH in a next SPS period (i.e., a next SPS PDSCH period) (i.e., information related to a resource at which an SPS PDSCH starts) may be adjusted/indicated by control information (e.g., DCI or MAC CE) by a base station.

- A base station and a UE may periodically allocate SPS PDSCH time resources. Here, a base station may adjust/indicate the first resource of an SPS PDSCH (i.e., in PDSCH transmission generated according to resource allocation in an active SPS PDSCH) in units of slots through control information (e.g., DCI or MAC CE).

For example, a UE and a base station may periodically allocate SPS PDSCH time resources according to Equation 6 below. Here, a base station may adjust/indicate a slot start time ($slot_{start\ time}$) of Equation 6 below in units of slots through control information (e.g., DCI or MAC CE).

[Equation 6] (*numberOfSlotsPerFrame* $\times$ SFN + slot number in the frame) = [(*numberOfSlotsPerFrame* $\times$ SFNstart time + slot_start time) + N $\times$ *periodicity* $\times$ *numberOfSlotsPerFrame* / 10] modulo (1024 $\times$ *numberOfSlotsPerFrame)*

In Equation 6, numberOfSlotsPerFrame represents a number of consecutive slots per frame, and number-OfSymbolsPerSlot represents a number of consecutive symbols per slot. In addition, in Equation 6, N is an integer value corresponding to the Nth PDSCH transmission (i.e., TO). The periodicity is a period of an SPS PDSCH and may be configured by the SPS-Config IE (see Table 6). SFN$_{start\ time}$ and slot$_{start\ time}$ may indicate an SFN and a slot of the first transmission (i.e., the first resource (TO)) of a PDSCH (i.e., in PDSCH transmission generated according to resource allocation within an active PDCCH) in which SPS is (re)initialized, respectively.

**[0204]** - For example, when adjusting/indicating a time resource of an SPS PDSCH (i.e., resource where an SPS PDSCH starts) through a MAC CE, as an example of information related to an SPS configuration index (e.g., sps-ConfigIndex) value of adjusted/indicated SPS being and a resource where the SPS PDSCH starts, the MAC CE may indicate an absolute slot value of a newly applied slot start time ($slot_{start\ time}$) or an offset value in units of slots as much as is changed in an existing slot.

A UE may apply information related to a resource where an SPS PDSCH starts (e.g., the adjusted slot value) from a time when reception of the MAC CE is completed or when a subsequent SPS period starts after a time when an ACK for the MAC CE is transmitted. That is, when an adjusted slot$_{start\ time}$ is indicated, the adjusted slot$_{start\ time}$ may be applied from a subsequent SPS period after the time.

**[0206]** - As another example, when adjusting/indicating a time resource of an SPS PDSCH (i.e., a resource where an SPS PDSCH starts) through DCI, the DCI may be CRC scrambled with a CS-RNTI or a new RNTI (i.e., a new RNTI defined for use in an SPS PDSCH time resource coordination/indication). Here, a HARQ process ID of DCI may indicate an SPS configuration index (e.g., sps-ConfigIndex) value of the corresponding SPS, and as an example of information related to a resource where an SPS PDSCH starts, an absolute slot value of a newly applied slot start time ($slot_{start\ time}$) or an offset value in units of slots as much as is changed in an existing slot may be indicated.

From a time when reception of the DCI is completed, or when HARQ-ACK information (e.g., ACK) for the DCI is transmitted, or when reception of a PDSCH scheduled by the DCI is completed, or when a subsequent SPS period starts after transmitting HARQ-ACK information (e.g., ACK) for a PDSCH scheduled by the DCI, a UE may apply information related to a resource where an SPS PDSCH starts (e.g., the adjusted slot value). Here, HARQ-ACK information (e.g., ACK) for the DCI or the HARQ-ACK information (e.g., ACK) for a PDSCH scheduled by the DCI may be transmitted in a PUCCH resource indicated by the DCI, or may be transmitted through the closest PUCCH resource after a certain time among A/N PUCCH resources configured for the SPS (in case there is no indicated PUCCH resource).

**[0208]** - In the case of adjusting/indicating a resource in which an SPS PDSCH of a periodic SPS PDSCH starts (e.g., a start slot of an SPS PDSCH) through the above-described method, in next SPS periods, an SPS period is not changed, and only a start slot of a periodic SPS PDSCH resource may be changed. Alternatively, an SPS period may also be changed in units of slots according to a change of an SPS PDSCH resource. For example, when slot$_{start\ time}$ value is indicated as information related to a resource in which an SPS PDSCH starts through control information (e.g., DCI or MAC CE), a resource in which SPS PDSCH transmission starts may be determined by applying the indicated slot$_{start\ time}$ value in Equation 6 above.

- In addition, in Equation 6 above, a symbol start time ($symbol_{start\ time}$) may be added together with a slot start time ($slot_{start\ time}$). In addition, as an example of information related to a resource where the SPS PDSCH starts, an absolute symbol value of a symbol start time ($symbol_{start\ time}$) adjusted in symbol units or an offset value in symbol units as much as is changed from an existing symbol may be indicated through control information (e.g., DCI or MAC CE). That is, in the above method, as an example of information related to a resource where an SPS PDSCH starts, control information (e.g., DCI or MAC CE) may indicate $symbol_{start\ time}$ instead of $slot_{start\ time}$, and may also indicate $symbol_{start\ time}$ together with $slot_{start\ time}$. Upon receiving this, a UE may apply an information value (e.g., the adjusted $slot_{start\ time}$ and/or $symbol_{start\ time}$) related to a resource where an SPS PDSCH starts from a subsequent SPS period or from a subsequent SPS PDSCH resource or from an SPS PDSCH resource of a subsequent SPS period.

For example, when $slot_{start\ time}$ and/or $symbol_{start\ time}$ values are indicated as information related to a resource in which an SPS PDSCH starts through control information (e.g., DCI or MAC CE), in Equation 7 below, a resource in which SPS PDSCH transmission starts may be determined by applying the indicated $slot_{start\ time}$ and/or $symbol_{start\ time}$ values.

[Equation 7] ($numberOfSlotsPerFrame \times$ SFN + slot number in the frame + symbol number in the slot) = [($numberOfSlotsPerFrame \times$ SFNstart time + slot_start time + symbol_start time) + N $\times$ $periodicity \times numberOfSlotsPerframe$ / 10] modulo ($1024 \times numberOfSlotsPerFrame$)

In Equation 7, numberOfSlotsPerFrame represents a number of consecutive slots per frame, and numberOfSymbolsPerSlot represents a number of consecutive symbols per slot. In addition, in Equation 7, N is an integer value corresponding to the Nth PDSCH transmission (i.e., TO). The periodicity is a transmission period of an SPS PDSCH and may be configured by the SPS-Config IE (see Table 6). $SFN_{start\ time}$, $slot_{start\ time}$, $symbol_{start\ time}$ may indicate an SFN, a slot, and a symbol of the first transmission (i.e., the first resource (TO)) of a PDSCH (i.e., in PDSCH transmission generated according to resource allocation within an active PDCCH) in which SPS is (re)initialized, respectively.

- In addition, a base station may adjust a resource (e.g. slot start time ($slot_{start\ time}$) and/or symbol start time ($symbol_{start\ time}$) ) in which an SPS PDSCH for a specific SPS (e.g., SPS connected/associated with specific uplink transmission) starts, activate a connected deactivated SPS, or reactivate connected activated SPS according to a specific uplink transmission (e.g., PUSCH, PUCCH, uplink traffic, uplink control information (UCI), etc.) transmitted by a UE.

For example, a UE supporting virtual reality (VR) may report pose information according to a motion of a user wearing a VR UE to a base station. For example, a VR UE may transmit pose information to a base station at intervals of 4 ms.

To this end, for example, a base station may configure/allocate a separate logical channel for transmitting pose information, and may configure it to map/link to a specific configured grant. And, the specific configured grant may be configured/defined for uplink transmission of only data of a logical channel for pose. Here, a PUSCH resource for the specific CG may transmit piggybacked UCI together (i.e., transmit TB and UCI together), and for example, this UCI may indicate whether pose information is changed. For example, if there is a user's pose change of more than a threshold compared to immediately before 4 ms (i.e., detected by a UE), 1 may be indicated as UCI, and 0 may be indicated otherwise. Alternatively, if there is a pose change compared to immediately before 4 ms (i.e., detected by a UE), 1 may be indicated as UCI, and 0 may be indicated if there is no pose change. Alternatively, if a plurality of step-by-step thresholds are defined/configured, the largest pose change can be indicated as 11, less pose changes as 10, less pose changes as 01, and no pose change as 00. A bit value indicated in the above-described UCI is only one example, and the present disclosure is not limited thereto.

Meanwhile, a TB of a PUSCH for pose may include pose information of a higher layer.

In addition, if there is no pose change or if pose change is less than or equal to a threshold, a UE may skip transmission of both a CG PUSCH for pose and UCI for piggyback. Here, a data unit for pose information without pose change (e.g., a TB including pose information) may also be discarded. For example, if there is no pose change or if pose change is less than or equal to a threshold, a packet data convergence protocol (PDCP) entity that provides a radio bearer for pose information may discard a data unit for pose information. As another example, if there is no pose change or if pose change is less than or equal to a threshold, a UE may be configured to discard a corresponding data unit by causing a PDCP entity to expire a PDCP discard timer for a data unit of pose information.

Alternatively, if there is no pose change or if pose change is less than or equal to a threshold, a UE may discard a TB including only such pose information.

Alternatively, if there is no pose change or if pose change is less than or equal to a threshold, a higher layer of a UE may discard this pose information or transmit it through a separate radio bearer and logical channel. Here, a PDCP entity for a separate radio bearer may be configured with a shorter PDCP discard timer than the PDCP entity.

As another example, a base station may configure/allocate a separate logical channel for transmitting pose information, and may configure to map/assign this to a specific PUCCH resource and a specific scheduling request (SR) configuration. And, when pose information for the logical channel is generated, the corresponding pose information triggers a buffer state request (BSR), and the BSR may be configured to trigger an SR. Here, for example, a BSR MAC CE may indicate that there is pose information to be transmitted by a UE through a value of a Logical Channel Group field or another specific field. Alternatively, when pose information for the logical channel is generated, an SR may be configured to trigger immediately without a BSR. When an SR for pose is triggered, a UE may transmit UCI with a PUCCH resource for this.

Here, if there is no pose change or if pose change is less than or equal to a threshold, it may be configured not to trigger a BSR or an SR. Alternatively, if there is no pose change or if pose change is less than or equal to a threshold, pose information may be discarded so as not to trigger a BSR or an SR.

According to UCI transmission, PUCCH transmission, or CG PUSCH transmission indicating or including the pose information, a base station and a UE may adjust a resource (e.g., slot start time ($slot_{start\ time}$) and/or symbol start time ($symbol_{start\ time}$) ) where an SPS PDSCH of a specific SPS (e.g., connected/associated SPS) starts through the pose information. For example, when pose information indicates a change in jitter, or when UCI or a PUCCH for pose information requests a change in CG viewpoint, a base station and a UE may adjust a resource (e.g., slot start time ($slot_{start\ time}$) and/or symbol start time ($symbol_{start\ time}$)) in which an SPS PDSCH of a specific SPS connected/associated with the pose information starts. Alternatively, a base station may activate specific SPS that has been deactivated, or reactivate specific SPS that has already been activated according to new timing by transmitting DCI indicating an SPS configuration index (e.g., sps-ConfigIndex) for the specific SPS.

To this end, a base station may connect pose information and a specific CG configuration index (e.g., CG-ConfigIndex) or pose information and a specific SR configuration. Accordingly, CG-UCI or CG-PUSCH transmission for a specific CG connected to pose or specific SR PUCCH transmission associated with pose is configured to indicate a resource (e.g., slot start time ($slot_{start\ time}$) and/or symbol start time ($symbol_{start\ time}$)) where an SPS PDSCH starts, so that a resource (e.g., slot start time ($slot_{start\ time}$) and/or symbol start time ($symbol_{start\ time}$)) where an SPS PDSCH starts can be adjusted in a subsequent SPS period of the connected specific SPS.

Alternatively, a UE may report a value of a resource (e.g., slot start time ($slot_{start\ time}$) and/or symbol start time ($symbol_{start\ time}$)) in which an SPS PDSCH starts adjusted for specific SPS to a base station through RRC signaling (e.g., an RRC assistant information message).

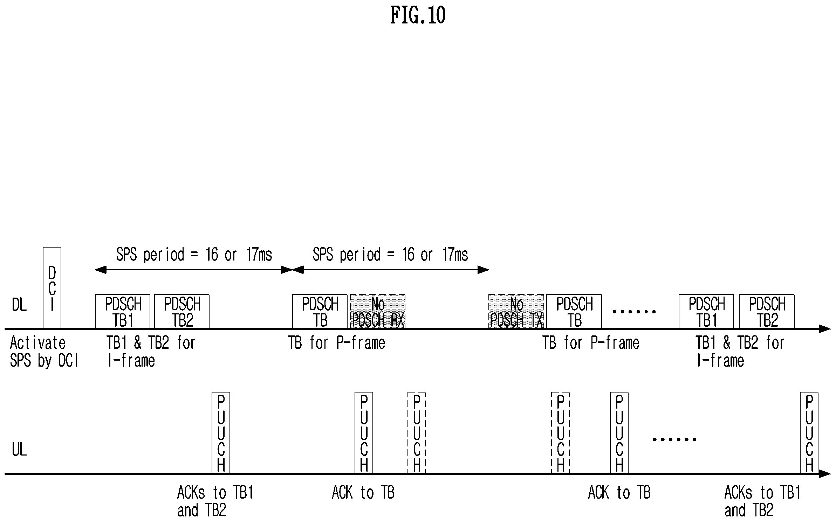

FIG. 10 illustrates a single semi-persistent scheduling configuration according to one embodiment of the present disclosure.

Hereinafter, an embodiment according to the present disclosure will be described with reference to FIG. 10.

Embodiment 5: When one SPS configuration is configured in a UE, an SPS PDSCH for the corresponding SPS configuration may be transmitted and received as follows.

Here, a logical channel mapped to one SPS configuration may be mapped only to specific SPS period(s). In addition, a UE may not receive some SPS PDSCH occasions (i.e., TO) in a specific SPS period according to a mapped logical channel.

According to this embodiment, a UE may receive an SPS PDSCH at N (N is a natural number) SPS PDSCH occasions (i.e., TO) in every SPS period. For example, for SPS PDSCHs belonging to (one or more) SPS periods or SPS windows for receiving data of a specific logical channel (hereinafter, a first logical channel) such as a logical channel of an I-frame, a UE may receive N (N is a natural number) SPS PDSCH occasions (i.e., TO) in every SPS period.

Here, a base station may allocate N SPS PDSCH occasions for each SPS period only within this (one or more) SPS periods or SPS windows. Alternatively, N SPS PDSCH occasions may always be allocated for every SPS period regardless of an SPS period or an SPS window.

For example, referring to FIG. 10, two SPS PDSCH occasions may be allocated to the first SPS period. A UE may determine that the first SPS period belonging to an SPS window of an I-frame logical channel is mapped only to an I-frame logical channel. Accordingly, a UE may receive both of the two SPS PDSCH occasions in the first SPS period. On the other hand, a UE may determine that the second and third SPS periods that do not belong to an SPS window of an I-frame logical channel (or belonging to an SPS window of a P-frame logical channel) are not mapped to an I-frame logical channel, or may be determined to be mapped to a P-frame logical channel. Therefore, a UE can receive only one SPS PDSCH occasion in the second and third SPS periods.

Here, when a TB is successfully received on an SPS PDSCH occasion received in a second or third SPS period (as in the example of the second SPS period of FIG. 10), a UE may skip without receiving next SPS PDSCH occasions of the same SPS period. However, if a TB is not successfully received on an SPS PDSCH occasion received in ae second or third SPS period, a UE may acquire a TB by receiving the next SPS PDSCH occasion.

In addition, a UE may transmit a HARQ-ACK for a TB received in a specific slot after a predetermined offset from an SPS PDSCH occasion at which the TB was received. Accordingly, a PUCCH slot for transmitting a HARQ-ACK may be allocated differently according to an SPS PDSCH occasion location at which a UE receives a TB. Alternatively, a UE may transmit a HARQ-ACK for a TB received in a specific slot after a predetermined offset based on the first or last SPS PDSCH occasion in a corresponding SPS period regardless of an SPS PDSCH occasion at which the TB was received.

Meanwhile, (i) for SPS PDSCHs that do not belong to (one or more) SPS periods or SPS windows for receiving data of a first logical channel, or (ii) for SPS PDSCHs belonging to an SPS period or SPS window for receiving data of another logical channel (i.e., a second logical channel), a UE can receive only k (K is a natural number) SPS PDSCH occasions in every SPS period. Here, a base station may configure k to a value smaller than N. In the case of (i), if (one or more) SPS periods or SPS windows for a first logical channel are configured, it may be unnecessary to configured (one or more) SPS periods or SPS windows for a second logical channel. On the other hand, in the case of (ii), even if (one or more) SPS periods or SPS windows for a first logical channel are configured, configuration of (one or more) SPS periods or SPS windows for a second logical channel may also be separately required.

Here, a base station may allocate k SPS PDSCH occasions (i.e., TOs) for each SPS period only within (one or more) SPS periods or SPS windows (i.e., in the case of (i), a period other than (one or more) SPS periods or SPS windows configured for a first logical channel, whereas in the case of (ii), (one or more) SPS periods or SPS windows configured for a second logical channel) related to a second logical channel. Alternatively, a base station allocates N SPS PDSCH occasions (i.e., TO) for every SPS period regardless of (one or more) SPS periods or SPS windows related to a second logical channel, however a UE may receive only an SPS PDSCH on specific k SPS PDSCH occasions in N SPS PDSCH occasions and may skip reception of an SPS PDSCH on the remaining N-k SPS PDSCH occasions. Here, the specific k SPS PDSCH occasions (i.e., TOs) may correspond to the first SPS PDSCH occasion of a corresponding SPS period to the k-th SPS PDSCH occassion, or may correspond to the (N-k+1)-th SPS PDSCH occasion of a corresponding SPS period to the last N-th SPS PDSCH occasion.

In this way, when a UE receives only specific k SPS PDSCHs in a corresponding SPS period, the UE may transmit a HARQ-ACK for the received TB in a specific slot after a predetermined offset from the k-th SPS PDSCH occasion. However, when a UE receives only N specific SPS PDSCHs in a corresponding SPS period, the UE may transmit a HARQ-ACK for the received TB in a specific slot after a predetermined offset from the N-th SPS PDSCH occasion. Accordingly, PUCCH slots in which the UE transmits a HARQ-ACK for each SPS period may be allocated differently.

Alternatively, regardless of how many SPS PDSCHs a UE has received (within one SPS) or how many SPS PDSCHs a base station has actually allocated, in every SPS period, a HARQ-ACK for the received TB may be transmitted in a specific slot after a predetermined offset from the N-th SPS PDSCH occasion.

Method 5-1: Both a first logical channel (e.g., a logical channel for an I-frame) and a second logical channel (e.g., a logical channel for a P-frame) may be mapped to a specific SPS configuration. And, a base station may configure a first logical channel (e.g., a logical channel for an I-frame) to be mapped only to an SPS period that is a multiple of N (i.e., 0-th CG period, N-th CG period, 2N-th CG period, etc.), and a second logical channel (e.g., a logical channel for a P-frame) to be mapped only to the remaining SPS periods (i.e., the 2nd to N-1-th CG periods, the (N+1)-th to (2N-1)-th CG periods, etc.). For example, when N is 10, a first logical channel (e.g., a logical channel for an I-frame) is configured to be mapped to SPS periods such as the 0th, 10th, 20th, 30th, ..., and a second logical channel (e.g., a logical channel for a P-frame) may be configured to be mapped to the remaining CG periods. Here, for example, a base station can configure an SPS period of a specific SPS configuration to 16 ms or 17 ms.

According to method 5-1, only the N value for an SPS period to which a first logical channel is mapped may be configured by a base station, and accordingly, a first logical channel may be mapped to an SPS period in which N is a multiple. And, even without a separate configuration, a second logical channel may be mapped in the remaining SPS periods.

Referring to FIG. 10, in the first SPS period and the N-th SPS period, a logical channel for an I-frame may be mapped, and TB 1 and TB 2 for the I-frame may be transmitted. Also, in the remaining SPS periods, a logical channel for a P-frame may be mapped and TBs for the P-frame may be transmitted.

Method 5-2: Both a first logical channel (e.g., a logical channel for an I-frame) and a second logical channel (e.g., a logical channel for a P-frame) may be mapped to a specific SPS configuration. Here, when there is data for a first logical channel (e.g., a logical channel for an I-frame), a TB may be configured preferentially with only the first logical channel, and data of other second logical channel (e.g., a logical channel for a P-frame) may not be included in the corresponding TB. For example, when I-frame data is generated, a UE can configure a TB with only I-frame data and receive an SPS PDSCH even if there is P-frame data. Here, when a UE receives a TB for a first logical channel (e.g., a logical channel for an I-frame) in a specific SPS period, from the next SPS period of the same SPS configuration, it can be expected to receive a TB for a second logical channel (e.g., a logical channel for a P-frame) .

According to method 5-2, priorities for a first logical channel and a second logical channel may be configured by a base station. In addition, reception of data for a logical channel with a low priority may be skipped or deferred depending on whether data for a logical channel with a high priority is generated by a UE.

Referring to FIG. 10, it can be interpreted as a case in which data for a logical channel mapped to an I-frame is generated in the first SPS period and the N-th SPS period. Accordingly, TB 1 and TB 2 for the I-frame may be transmitted. In addition, it may be interpreted as a case in which data for a logical channel mapped to an I-frame is not generated in the remaining SPS periods. Therefore, a TB for a P-frame can be transmitted.

Method 5-3: An SPS window may be configured for a specific SPS configuration. Regarding reception of an SPS PDSCH within the configured SPS window, the SPS PDSCH may be received only through a specific first logical channel (e.g., a logical channel for an I-frame). In addition, a base station and a UE can expect this type of operation.

Here, SPS windows may be separately configured for each logical channel, and different logical channels may be mapped only to different SPS windows.

Referring to FIG. 10, it can be interpreted as a case where an SPS window for an I-frame are configured for the first SPS period and the N-th SPS period, and an SPS window for a P-frame are configured for the remaining SPS periods. Therefore, only TB 1 and TB 2 of a logical channel for an I-frame can be transmitted in the first SPS period and the N-th SPS period, and only TB of a logical channel for a P-frame can be transmitted in the remaining SPS periods.

Embodiment 6: When one SPS configuration is configured for a UE, an SPS PDSCH for the corresponding SPS configuration may be transmitted and received as follows.

For one specific SPS (e.g., SPS1), TDM PDSCH occasions (i.e., TOs) or FDM PDSCH occasions (i.e., TOs) may be configured in one SPS period, and repeated transmission of a PDSCH of the same TB or multiple transmission of a PDSCH of different TBs may be supported.

- For TDM PDSCH transmission, when a plurality of PDSCH resources are allocated in a conventional PDSCH repetition scheme, multiple TBs can be transmitted using different PDSCH resources instead of repetition of the same TB. Here, slot-based PDSCHs may be arranged/allocated for each different slot and transmitted, or sub-slot-based PDSCHs may be arranged/assigned to one or a plurality of slots and transmitted.
- For FDM PDSCH transmission, a plurality of PDSCH resources may be allocated by FDM in the same slot of the same period. For example, different TBs of short packet data budget (PDB) or different TBs for an I-frame may be configured to transmit in the same slot with FDM.
- When multiple transmissions of FDMed PDSCHs are configured for specific SPS in which multiple transmissions are configured within one SPS period by a base station, a UE can expect FDMed PDSCHs in the same SPS period. On the other hand, if there is no configuration for multiple transmission of FDMed PDSCH by a base station, TDMed PDSCHs of the same SPS period can be expected. Alternatively, if there is no explicit configuration by a base station, a UE may blindly detect whether FDMed PDSCH transmission or TDMed PDSCH transmission is performed within one SPS period for a specific SPS.
- M (M is a natural number) TBs may be transmitted for TDM SPS PDSCH or FDM SPS PDSCH resources repeated N times in one period. Here, PDSCH resources within one period are grouped into N/M TDM PDSCH sets or FDM PDSCH sets, and one TB may be repeatedly transmitted in one TDM or FDM PDSCH set. For example, when 4 PDSCH resources are allocated to one CG period, the first two TDMed or FDMed SPS PDSCH resources and the next two TDMed or FDMed SPS PDSCH resources may be configured to different SPS PDSCH sets, different TBs may be transmitted through different PDSCH sets. Here, TDM or FDM may be performed between different PDSCH sets.

Here, FDM SPS PDSCH resources or FDM SPS PDSCH sets may be allocated to the same or different DL BWPs or to the same or different DL cells.

In addition, PDSCHs belonging to the same SPS PDSCH set are configured to the same time/frequency resource size, but PDSCHs belonging to different PDSCH sets may be configured to different time/frequency resource sizes.

For example, in FIG. 10, two PDSCHs for SPS may be transmitted in the same SPS period, and different TBs may be transmitted (i.e., a PDSCH carrying TB1 and a PDSCH carrying TB2 in the first SPS period).

In addition, different PDSCH sets within the same SPS period may be mapped to different HARQ process IDs, and different PDSCHs belonging to the same PDSCH set may be mapped to the same HARQ process ID.

For example, HARQ process ID1 for a first SPS PDSCH set may be determined according to Equation 8 below, and HARQ process ID2 for a second SPS PDSCH set in the same SPS period may be determined by HARQ process ID1 of a first SPS PDSCH set + the number of HARQ processes (nrofHARQ-Processes) (see Equation 9) or HARQ process ID1 of a first SPS PDSCH set + offset (see Equation 10).

[Equation 8] HARQ Process ID1 = [floor (CURRENT_slot $\times$ 10 / (*numberOfSlotsPerFrame* $\times$ *periodicity*))] modulo *nrofHARQ-Processes + harq-ProcID-Offset*

In Equation 8, CURRENT_slot = [(SFN $\times$ numberOfSlotsPerFrame) + slot number in the frame]. numberOfSlotsPerFrame means the number of consecutive slots per frame.

HARQ process ID2 of a second SPS PDSCH set may be determined according to Equation 9 or Equation 10 below.

【Equation 9】

HARQ Process ID2 = HARQ Process ID1 + *nrofHARQ-Processes*

【Equation 10】

$$\text{HARQ Process ID2} = \text{HARQ Process ID1} + \textit{harq-ProcID-Set2-Offset}$$

In Equation 10, an offset (harq-ProcID-Set2-Offset) may be configured by a base station through an RRC message or activation DCI.

In addition, according to a configuration of a base station, different SPS PDSCH sets for a UE may be configured to be mapped to different TRP and TCI states. In addition, the same TB may be repeatedly transmitted from multiple TRPs through different SPS PDSCH sets. In this case, DMRSs of different PDSCH sets may be QCLed and transmitted in different TCI states.

For example, in FIG. 10, two PDSCHs for SPS are transmitted in the same SPS period, but may be configured to transmit the same TB. Here, different PDSCHs are mapped to the same or different TCI states so that the same TB can be repeatedly transmitted. Here, different PDSCH sets of the same period may have the same HARQ process ID value.

Embodiment 7: A TB that exceeds/surpass a Packet Delay Budget (PDB) or delay requirement value may not be transmitted even if there are SPS resources (i.e., even if SPS resources are allocated according to an SPS configuration).

Hereinafter, in the description according to this embodiment, a PDB value or a delay requirement value may mean an upper limit value for a time during which a packet (data) may be delayed between a UE and a network (e.g., a base station), and the present disclosure is not limited to the term PDB value or delay requirement value and may be substituted with other terms.

For example, a PDB value may be configured for a logical channel. In this case, when specific SPS is mapped only to specific logical channel(s), a UE may stop reception of an SPS PDSCH or reception of a retransmitted PDSCH based on a maximum or minimum PDB value of specific logical channel(s) (i.e., a maximum or minimum value among PDB values for logical channels mapped to a specific SPS).

As another example, a base station may configure a specific (e.g., worst) PDB value for each SPS configuration index (e.g., sps-ConfigIndex) for specific SPS. A UE may stop reception of an SPS PDSCH for the corresponding SPS or reception of a retransmitted PDSCH for the corresponding SPS based on a delay requirement value.

Hereinafter, in the description of the present embodiment, for convenience of explanation, transmission of an SPS PDSCH after initial transmission of the SPS PDSCH may refer to transmission of an SPS PDSCH transmitted without waiting for feedback on the previous transmission, and transmission of a retransmitted PDSCH may refer to SPS PSDCH transmission as retransmission for the previous SPS PDSCH indicated by DCI. However, the present disclosure is not limited thereto, and all refer to SPS PDSCHs for repeatedly transmitting the same TB, and may be collectively referred to as HARQ retransmission.

**[0261]** - In a plurality of SPS PDSCH transmissions allocated to the same HARQ process ID in a specific SPS period, a UE may determine that a specific TB (i.e., the same TB) is repeatedly transmitted from an initial SPS PDSCH resource or a designated SPS PDSCH resource within the specific SPS period. In addition, when a time difference from the first or last symbol of the first SPS PDSCH resource or a designated SPS PDSCH resource to the first or last symbol of the N-th (N is a natural number) SPS PDSCH transmission is greater than or equal to the PDB value, a UE may flush a buffer of a HARQ process for receiving the TB. After that, a UE may not receive all of the (N+k)-th SPS PDSCH transmissions for the same TB. (k is a natural number, k = 1, 2, 3, ...)

In other words, if a number of repetitions (e.g., determined by higher layer signaling or based on rules predefined by lower layers, etc.) for a specific SPS configuration is greater than 1, the number of repetitions - 1 HARQ retransmissions (i.e., SPS PDSCH transmission) after the first transmission (i.e., SPS PDSCH transmission) in a bundle (i.e., refers to total repetitions) may follow within the bundle. For repeated transmission within a bundle, the same HARQ process may be used. Within a bundle, HARQ retransmission (i.e., SPS PDSCH transmission(s) after the first SPS PDSCH) can be triggered without waiting for feedback on previous transmissions according to the number of repetitions for the corresponding SPS configuration. That is, the same TB can be repeatedly transmitted through SPS PDSCH transmissions as many times as the number of repetitions without retransmission feedback by a base station.

Alternatively, in a plurality of SPS PDSCH transmissions allocated to the same HARQ process ID in a specific SPS period, a UE may determine that a specific TB (i.e., the same TB) is repeatedly transmitted from the first SPS PDSCH resource or a designated SPS PDSCH resource within a specific SPS period, or may start or restart an SPS timer for a corresponding HARQ process (and may also start or restart an SPS timer when receiving a new SPS PDSCH for the same TB again). If an SPS timer expires, a UE flushes a buffer of a corresponding HARQ process and may not receive all of the (N+k)-th SPS PDSCH transmissions for the same TB (k = 1, 2, 3, ... ).

Here, an SPS timer value may be individually configured for each SPS configuration.

Alternatively, in a plurality of SPS PDSCH transmissions allocated to the same HARQ process ID in a specific SPS period, a UE may determine that a specific TB (i.e., the same TB) has been repeatedly transmitted from an initial SPS PDSCH resource or a designated SPS PDSCH resource within a specific SPS period. In addition, when a time difference from the first or last symbol of the first SPS PDSCH resource or a designated SPS PDSCH resource to the first or last symbol of the N-th (N is a natural number) SPS PDSCH transmission is greater than or equal to the PDB value, a UE may stop an SPS timer for a corresponding HARQ process.

That is, whether or not to stop an SPS timer may be determined based on a PDB value (or delay requirement) configured for a corresponding SPS configuration or for a corresponding logical channel. In other words, an SPS timer may expire according to a PDB value regardless of a value configured for the SPS timer.

Here, even when the TB is successfully received (e.g., when a UE transmits an ACK for the corresponding TB to a base station), an SPS timer for a corresponding HARQ process may be stopped.

In addition, when an SPS timer is stopped, a UE may not receive an SPS PDSCH or a retransmitted PDSCH for a corresponding HARQ process until it is determined that a new data indicator (NDI) is toggled (i.e., until it is determined to be transmission of a new TB).

If it is determined that an NDI is toggled for an SPS PDSCH for a corresponding HARQ process (i.e., if it is determined to be transmission of a new TB), a UE may start or restart an SPS timer for the corresponding HARQ process.

- In addition, in SPS PDSCH transmission of a specific TB assigned to the same HARQ process ID and TB retransmission of a DCI-based PDSCH for this, a UE may determine that a specific TB (i.e., the same TB) has been repeatedly transmitted from an initial SPS PDSCH resource or a designated SPS PDSCH resource within an SPS period. In addition, when a time difference from the first or last symbol of the first SPS PDSCH resource or a designated SPS PDSCH resource to the first or last symbol of the DCI-based PDSCH transmission is greater than or equal to a PDB value, a UE may flush a buffer of a HARQ process for receiving the TB. After that, a UE may not receive all DCI-based retransmitted PDSCH transmissions for the same TB (k = 1, 2, 3, ...).

Alternatively, a UE may start or restart an SPS timer for a corresponding HARQ process from an initial SPS PDSCH resource or a designated SPS PDSCH resource (in addition, when receiving a new SPS PDSCH or a DCI-based retransmitted PDSCH for the same TB again, a UE may start or restart an SPS timer). If an SPS timer expires, a UE may flush a buffer of a corresponding HARQ process, and then may not receive all DCI-based retransmitted PDSCH transmissions for the same TB (k = 1, 2, 3, ...).

- Meanwhile, when an SPS timer for a specific HARQ process ID expires or is stopped, a base station and a UE may consider SPS PDSCH resources mapped to the same HARQ process ID to be allocated thereafter as being used for new TB transmission.

However, while an SPS timer for a specific HARQ process ID is running, SPS PDSCH resources mapped to the same HARQ process ID may be regarded as being used for retransmission of the TB.

Alternatively, while an SPS timer for a specific HARQ process ID initially started in the N-th SPS period is running, SPS PDSCH resources mapped to the same HARQ process ID in the (N+k)-th SPS period do not transmit TB (k = 1, 2, 3, ...).

Meanwhile, in the present disclosure, a method for scheduling a plurality of TBs in units of a GOP pattern with one DCI according to uplink transmission (e.g., UCI, PUSCH, PUCCH, etc.) of a UE such as pose information or in consideration of jitter of downlink traffic and a method of allocating a plurality of PUCCH resources are proposed.

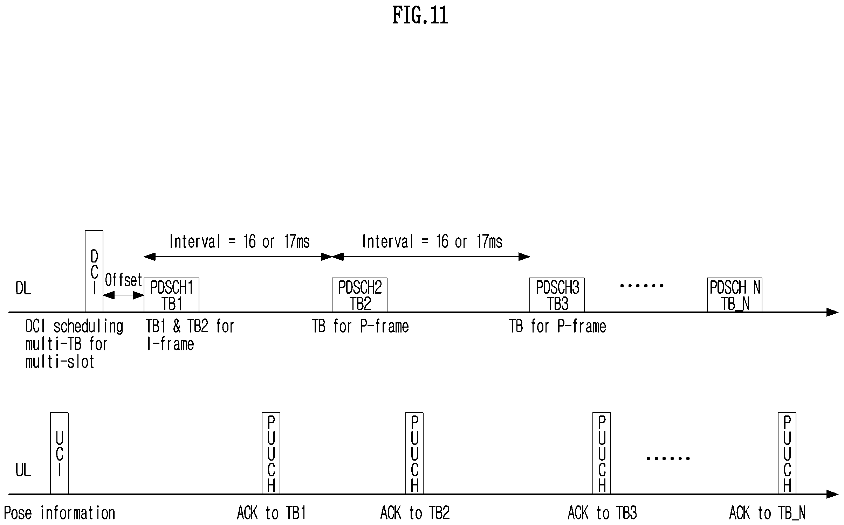

FIG. 11 illustrates a scheduling method for a plurality of transport blocks based on downlink control information according to an embodiment of the present disclosure.

As shown in FIG. 11, a base station may dynamically schedule periodic radio resources (for a certain period of time) to a UE with one DCI according to a traffic pattern of a GOP structure unit. Here, a base station may allocate a plurality of N (N is a natural number) radio resources at regular intervals with one DCI. For a plurality of radio resources, the same time/frequency resource allocation within a slot may be repeated at regular intervals (e.g., one slot).

A base station/UE may perform transmission using one or a part of a plurality of SPS radio resources within the period according to a traffic pattern. Considering a user data generation time of a base station/UE, the fastest radio resource capable of transmitting a transport block (TB) including user data may be selected.

Embodiment 8: Multi-slot/multi-TB dynamic scheduling method for periodically allocating N (N is a natural number) PDSCH resources to one DCI

Here, a base station may perform multi-slot/multi-TB scheduling with one DCI according to specific uplink transmission transmitted by a UE. Here, multi-slot/multi-TB scheduling may mean that multiple TBs are scheduled over multiple slots, but it is not necessarily limited that one TB is mapped to one slot.

Here, since a description of specific uplink transmission (eg, PUSCH, PUCCH, uplink traffic, UCI, etc.) is the same as in the above-described Embodiment 4, a detailed description thereof is omitted (see Embodiment 4).

1) According to UCI transmission, PUCCH transmission, or CG PUSCH transmission indicating or including the pose information, a base station may perform multi-TB/multi-slot scheduling with DCI. For example, as shown in FIG. 11, a base station may allocate N periodic dynamic PDSCH resources through one DCI.

Here, one DCI allocates N PDSCH resources, and each PDSCH resource may be allocated one by one at a specific interval. For example, one PDSCH resource may be allocated every 16 ms or 17 ms.

In addition, a CRC of the DCI may scrambled with a C-RNTI, a CS-RNTI, or a separate multi TB (MTB)-RNTI.

In addition, when a slot in which the k-th PDSCH transmission resource (i.e., the k-th PDSCH resource among N PDSCH resources) is located is designated as a UL slot according to an RRC configuration or a slot format indicator (SFI) DCI, the k-th PDSCH transmission resource may be dropped, or the k-th PDSCH transmission resource may be shifted to the next nearest DL slot and be allocated.

Here, N different PDSCHs may be PDSCHs initially transmitting different TBs. In addition, retransmission of each TB may be indicated by separate DCI.

2) DCI for multi-TB/multi-slot scheduling may include at least one of the following information.

- For N PDSCH transmissions scheduled by one DCI, N value (i.e., a number of PDSCH transmissions or a number of TBs or a number of slots)
- Interval for slots to which each PDSCH transmission is allocated (e.g., 16 ms or 17 ms)

Here, an order/index in a list of a plurality of interval values assigned to an RRC message may be indicated by DCI. For example, when 4 ms, 8 ms, 16 ms, and 17 ms are configured as an RRC message, and DCI indicates period 3, an interval value may be determined as the third value, 16 ms. That is, in this case, the (k+1)0th PDSCH transmission occurs after 16 slots from the k-th PDSCH transmission slot.

- 1st PDSCH transmission slot

DCI may indicate a first PDSCH transmission slot among N PDSCHs to be scheduled as an offset as shown in FIG. 11. For example, if offset = 3, the first PDSCH is transmitted in the third slot after a DCI transmission slot.

- Time domain resource allocation

This allocates a time resource (e.g., first symbol and/or number of symbols for each PDSCH transmission, etc.) for each PDSCH transmission. Here, time resource allocation may be equally applied to each transmission of one PDSCH allocated for each interval.

- Frequency domain resource allocation

This allocates a frequency resource (e.g., PRB index and/or number of PRBs for each PDSCH transmission, etc.) for each PDSCH transmission. Here, frequency resource allocation may be equally applied to each transmission of one PDSCH allocated for each interval.

- New Data Indicator (NDI)

This value may be fixed to 1 (or 0) for initial transmission, and if this value is toggled, new transmission may be indicated.

- HARQ process identifier (HARQ process ID)

This may indicate a HARQ process ID value applied to the first PDSCH transmission. For example, a HARQ process ID of DCI indicates HARQ process ID1 for the first PDSCH transmission, and subsequent PDSCH transmissions may be configured/defined to have an ID value that increases or decreases by n (n = 1, 2, 3, ...) from HARQ process ID1. Here, the n value may also be indicated by DCI.

- PUCCH resource indicator (PRI)

This indicates a PUCCH resource to transmit a HARQ-ACK for each PDSCH among N PDSCH transmissions. A PUCCH resource indicated for each of N PDSCH transmissions may be periodically allocated N times. In addition, PDSCH transmission and PUCCH transmission may be allocated after being mapped 1:1.

- PDSCH-HARQ feedback timing indicator (PDSCH-to-HARQ_feedback timing indicator)

This indicates an interval between each PDSCH transmission slot and an acknowledgment/negative acknowledgment (A/N) PUCCH slot. Each PDSCH may have the same interval as individual PUCCH resources.

- Bandwidth part indicator (BPI)

This designates a DL BWP in which N PDSCHs are transmitted. According to a value of this field, a UE can receive N PDSCHs in the same DL BWP as DCI or switch to a designated DL BWP and receive N PDSCHs.

- Offset to the first PDSCH

This indicates an interval from a DCI slot to the first PDSCH slot.

3) A UE may transmit HARQ-ACK information (i.e., ACK or NACK) to a base station through PUCCH resources mapped 1:1 for every PDSCH transmission.

If a NACK is received for reception of the k-th PDSCH, a base station may allocate a retransmission resource for a TB of the k-th PDSCH as separate DCI. Here, a CRC of separate DCI (ie, DCI for retransmission) may be scrambled with a C-RNTI, a CS-RNTI, or a separate MTB-RNTI.

DCI for retransmission indicates an HARQ process ID mapped to the k-th PDSCH transmission, and an NDI may be fixed to 0 (or 1) to indicate retransmission (i.e., the same value as an NDI value for the first PDSCH transmission is maintained).

If an ACK for the k-th TB is transmitted before PDSCH transmission for the (K+1)-th TB, a UE may expect and receive the (K+1)-th PDSCH transmission. On the other hand, if a NACK is transmitted for the k-th TB, a UE may skip reception without expecting the (k+1)-th PDSCH transmission. Therefore, if an ACK for the k-th TB is not received before the (k+1)-th PDSCH resource, a base station may drop the (k+1)-th PDSCH transmission and transmit a next new TB in the (k+2)-th PDSCH transmission.

Here, a UE may transmit an ACK (or NACK) through a PUCCH resource for the dropped (k+1)-th PDSCH transmission.

Meanwhile, when N PDSCH resources are allocated, only up to the N-th PDSCH including the dropped PDSCH transmission may be transmitted. Here, when the last N-th PDSCH is dropped, a UE may transmit an ACK (or NACK) through a PUCCH resource for the last N-th PDSCH transmission.

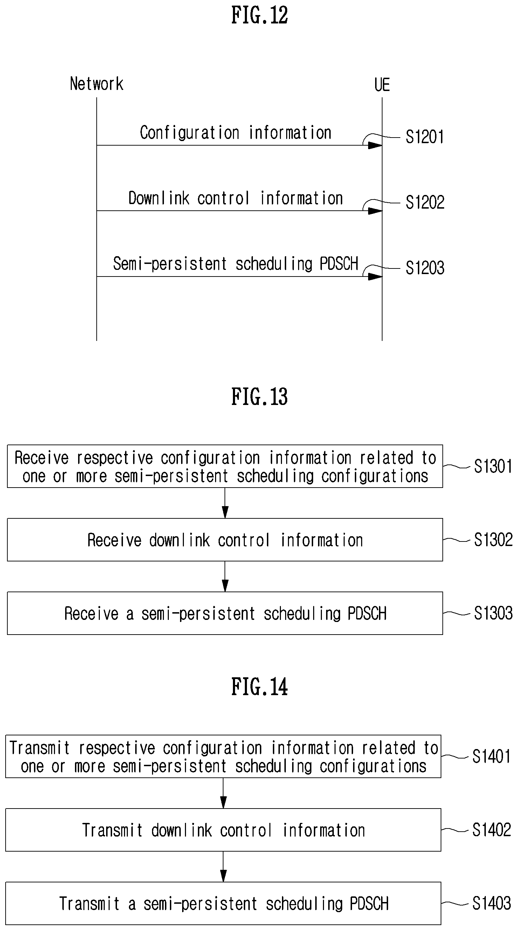

FIG. 12 illustrates a signaling procedure between a network and a UE for a method for transmitting and receiving a semi-persistent scheduling PDSCH according to an embodiment of the present disclosure.

FIG. 12 exemplifies a signaling procedure between a network (e.g., TRP 1, TRP 2) and a terminal (i.e., UE) in a situation of multiple TRP (i.e., M-TRP, or multiple cells, hereinafter all TRP may be substituted with cells) to which the methods (e.g., Embodiments 1 to 8 and a combination of one or more proposed methods in Embodiments 1 to 8) proposed in the present disclosure may be applied. FIG. 12 is only for convenience of description and does not limit the scope of the present disclosure. In addition, some step(s) illustrated in FIG. 12 may be omitted depending on circumstances and/or settings.

The signaling scheme described in FIG. 12 may be extended and applied to signaling between multiple TRPs and multiple UEs. In the following description, a network may be one base station including a plurality of TRPs or may be one cell including a plurality of TRPs. In an example, ideal/non-ideal backhaul may be configured between TRP 1 and TRP 2 included in a network. In addition, the following description is described based on a plurality of TRPs, but it may be also equivalently extended and applied to transmission through a plurality of panels. In addition, in the present disclosure, an operation in which a terminal receives a signal from TRP1/TRP2 may be interpreted/explained (or may be an operation) as an operation in which a terminal receives a signal from a network (via/using TRP1/2), and an operation in which a terminal transmits a signal to TRP1/TRP2 may be interpreted/explained (or may be an operation) as an operation in which a terminal transmits a signal to a network (via/using TRP1/TRP2), and vice versa.

A base station may mean a generic term for an object that transmits and receives data to and from a UE. For example, a base station may be a concept including one or more transmission points (TPs), one or more transmission and reception points (TRPs), etc. Also, a TP and/or a TRP may include a panel of a base station, a transmission and reception unit, etc. In addition, "TRP" may be substituted with an expression such as a panel, an antenna array, a cell (e.g., macro cell / small cell / pico cell, etc.), TP (transmission point), a base station (base station, gNB, etc.), etc. and applied. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

A UE may receive configuration information from a network through/using TRP 1 (and/or TRP 2) (S1201).

The configuration information may include information related to network configuration (e.g., TRP configuration)/information related to transmission/reception based on M-TRP (e.g., resource allocation, etc.), etc. In this case, the configuration information may be transmitted through higher layer signaling (e.g., RRC signaling, MAC-CE, etc.).

The configuration information may include configuration information related to an SPS configuration described in the above-described proposed methods (e.g., Embodiments 1 to 8 and a combination of one or more proposed methods in Embodiments 1 to 8). For example, one or more SPS configurations may be configured for a UE, and the configuration information may include respective configuration information (e.g., SPS-Config IE) for each of one or more SPS configurations. Here, the respective configuration information for each of the one or more SPS configurations may include information/parameters exemplified in Table 6 above.

In addition, for example, the configuration information may include information for configuring a joint TCI and/or separate DL/UL TCI. For example, the configuration information may provide a reference signal for QCL for a DMRS/downlink signal (e.g., CSI-RS) of a downlink channel (e.g., PDSCH, PDCCH), and/or may include a list of TCI states providing reference for determining an uplink transmission spatial filter of a DMRS/uplink signal (e.g., SRS) of an uplink channel (e.g., PUSCH, PUCCH).

In addition, for example, respective configuration information for each SPS configuration according to the above-described Embodiment may include information on a logical channel associated with the corresponding SPS configuration.

In addition, respective configuration information for each SPS configuration according to the above-described Embodiment may include information on a TCI state for the corresponding SPS configuration. Here, a TCI state for a corresponding SPS configuration may be configured/indicated within the above-described list of TCI states.

Meanwhile, although not shown in FIG. 12, a UE may receive a MAC CE for activating and/or deactivating a downlink (or joint) TCI state (i.e., activation command) via/using TRP 1 (and/or TRP 2) from a network. The MAC CE may indicate activation and/or deactivation of one or more TCI states (i.e., one or more TCI states in a TCI state list) for a downlink channel/signal, and may be used to map one TCI state for a downlink channel/signal (i.e., a TCI state in a TCI state list) to a codepoint of a TCI field in DCI.

A UE may receive downlink control information through/using TRP 1 (and/or TRP 2) from a network (S1202).

Here, downlink control information (DCI) may be transmitted through a PDCCH and may be used to trigger activation/release of a specific SPS configuration among one or more SPS configurations configured for a UE. In addition, DCI may provide additional information to resource allocation information provided in the configuration information (e.g., SPS-Config IE). In addition, DCI may include resource allocation information for an SPS PDSCH for retransmission when retransmission of the SPS PDSCH for an activated SPS configuration is requested from a UE.

In addition, one or more SPS configurations may be activated for a UE, and in this case, a UE may receive respective activation DCI for one or more SPS configurations from a network.

In addition, a TCI state for one or more SPS configurations configured for a UE may be configured by configuration information (e.g., SPS-Config IE) related to the SPS configuration, or may be configured/indicated the MAC CE described above or indicated by activation DCI.

A UE receives an SPS PDSCH via/using TRP 1 (and/or TRP 2) from a network (S1203).

Here, a UE may receive an SPS PDSCH (or a PDSCH by a dynamic grant) from a network based on an operation described in the above proposed methods (e.g., Embodiments 1 to 8 and a combination of one or more proposed methods in Embodiments 1 to 8).

For example, according to the Embodiment 1, when a plurality of SPS configurations configured for a UE are connected/associated with each other, the UE may determine that resources for other SPS configurations are valid or that other SPS configurations are activated, only when there is reception of a specific SPS configuration. In addition, a UE may determine whether to receive an SPS PDSCH for other SPS through an SPS PDSCH for the specific SPS.

In addition, for example, according to the Embodiment 2, when a plurality of SPS configurations configured for a UE are connected/associated with each other, in an SPS PDSCH period for an SPS2 configuration that overlaps with an SPS1 configuration, an SPS PDSCH resource for SPS2 may not be allocated, and a UE may skip SPS PDSCH reception.

In addition, for example, when a plurality of SPS configurations configured for a UE are connected/associated with each other according to the Embodiment 3, SPS PDSCH reception for other SPS configurations may be indicated through SPS PDSCH reception for one SPS configuration.

In addition, for example, according to Embodiment 4, according to receiving information related to a resource to which an SPS PDSCH for one or more SPS configurations is next transmitted (or resumed (or started)) through control information (e.g., DCI or MAC CE), reception of the SPS PDSCH may not be performed until before a resource determined by the information. In addition, the SPS PDSCH for the one or more SPS configurations may be received from a resource determined by the information related to a resource to which the SPS PDSCH is next transmitted.

In addition, for example, according to the Embodiment 5, only a specific logical channel may be mapped to a specific (one or more) period in one SPS configuration, and a TB transmitted in an SPS PDSCH may be determined according to the logical channel mapped according to the (one or more) SPS period. Alternatively, when a plurality of logical channels are mapped in one SPS configuration, a TB transmitted in an SPS PDSCH may be determined according to a priority of the logical channels. Alternatively, only a specific logical channel may be mapped within a specific SPS window in one SPS configuration, and only an SPS PDSCH for the corresponding logical channel may be transmitted.

In addition, for example, according to the Embodiment 6, a plurality of SPS PDSCH resources within one SPS PDSCH transmission period for one SPS configuration may be divided into a plurality of SPS PDSCH resource sets (i.e., a first SPS PDSCH resource set and a second SPS PDSCH resource set). And, in each SPS PDSCH resource set, the same or different TBs may be transmitted through an SPS PDSCH. Here, different TCI states may be configured/indicated for each SPS PDSCH resource set, and a reference signal for QCL for a DMRS of an SPS PDSCH in each SPS PDSCH resource set may be provided by a TCI state for a corresponding SPS PDSCH resource set.

Also, for example, according to Example 7, if a packet delay budget (PDB) or delay requirement value is exceeded, even if an SPS resource is allocated, an SPS PDSCH for a corresponding TB may not be received.

FIG. 13 is a diagram illustrating an operation of a UE for a method for transmitting and receiving a semi-persistent scheduling PDSCH according to an embodiment of the present disclosure.

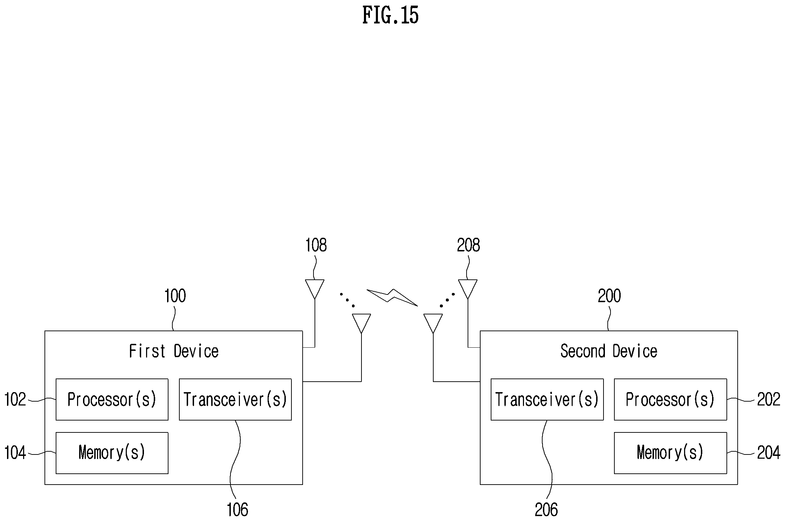

Referring to FIG. 13, FIG. 13 exemplifies an operation of a UE based on the proposed methods (e.g., Embodiments 1 to 8 and a combination of one or more proposed methods in Embodiments 1 to 8). FIG. 13 is only for convenience of description, but it is not intended to limit a scope of the present disclosure. Some step(s) shown in FIG. 13 may be omitted according to situations and/or configurations, etc. In addition, a UE in FIG. 13 is only one example, and may be implemented as an apparatus illustrated in FIG. 15. For example, a processor (102/202) of FIG. 15 may control to transmit and receive channel/signal/data/information, etc. by using a transceiver (106/206), and control to store transmitted or received channel/signal/data/information in a memory (104/204).

In addition, an operation of FIG. 13 may be processed by one or more processors (102, 202) of FIG. 15. In addition, an operation of FIG. 13 may be stored in a memory (e.g., one or more memories (104, 204) of FIG. 15) in a form of an instruction/program (e.g., instruction, executable code) for driving at least one processor (e.g., 102, 202) of FIG. 15.

A UE receives respective configuration information related to one or more semi-persistent scheduling (SPS) configurations (through/using TRP 1 (and/or TRP 2)) from a base station (S1301).

The configuration information related the SPS configuration may include configuration information related to an SPS configuration described in the above-described proposed methods (e.g., Embodiments 1 to 8 and a combination of one or more proposed methods in Embodiments 1 to 8). For example, one or more SPS configurations may be configured for a UE, and respective configuration information (e.g., SPS-Config IE) for each of one or more SPS configurations may include information/parameters exemplified in Table 6 above.

In addition, for example, respective configuration information for each SPS configuration according to the above-described Embodiment may include information on a logical channel associated with the corresponding SPS configuration.

A UE receives downlink control information (through/using TRP 1 (and/or TRP 2)) from a base station (S1302) .

Here, downlink control information (DCI) may be transmitted through a PDCCH and may be used to trigger activation/release of a specific SPS configuration among one or more SPS configurations configured for a UE. In addition, DCI may provide additional information to resource allocation information provided in the configuration information (e.g., SPS-Config IE). In addition, DCI may include resource allocation information for an SPS PDSCH for retransmission when retransmission of the SPS PDSCH for an activated SPS configuration is requested from a UE.

In addition, one or more SPS configurations may be activated for a UE, and in this case, a UE may receive respective activation DCI for one or more SPS configurations from a base station.

Meanwhile, although not shown in FIG. 13, a UE may receive information related to a resource to which an SPS PDSCH for one or more SPS configurations is next transmitted (via/using TRP 1 (and/or TRP 2)) from a base station.

Here, information related to a resource to which an SPS PDSCH for one or more SPS configurations is next transmitted may be provided to a UE by being included in DCI (hereinafter, first DCI) of the step S1302, or may be provided to a UE by being included in DCI (hereinafter referred to as second DCI) separate from the first DCI of step S1302 or a MAC CE.

The information related to a resource to which the SPS PDSCH is next transmitted may be indicated in units of slots or symbols. For example, the information related to a resource in which the SPS PDSCH is next transmitted may indicate a slot or symbol of a resource in which the SPS PDSCH starts or an offset value from a slot or symbol in a resource in which the SPS PDSCH starts.

Meanwhile, although not shown in FIG. 13, a UE may transmit uplink control information (UCI) to a base station. Here, uplink control information (UCI) may include pose information of a UE and/or a change indicator of pose information. In this case, the information related to a resource through which the SPS PDSCH is next transmitted may be applied to the one or more SPS configurations associated with the UCI.

Here, the UCI may be transmitted through a CG PUSCH for a specific CG configuration associated with transmission of the UCI. In this case, the CG PUSCH for the specific CG configuration may include only data for a specific logical channel mapped to the specific CG configuration, and the UCI may be piggybacked and transmitted to the CG PUSCH for the specific CG configuration. Alternatively, the UCI may be transmitted through a PUCCH based on an SR associated with the UCI.

A UE receives an SPS PDSCH (through/using TRP 1 (and/or TRP 2)) from a base station (S1303).

Here, as described above, if the information related to a resource to which the SPS PDSCH for the one or more SPS configurations is next transmitted is provided to a UE, the UE may not receive the SPS PDSCH until before a resource determined by the information related to a resource to which the SPS PDSCH is next transmitted. In addition, the UE can receive the SPS PDSCH from a resource determined by the information related to a resource to which the SPS PDSCH is next transmitted.

In addition, the information related to a resource to which the SPS PDSCH is next transmitted may be applied i) from when the first DCI or the second DCI or the MAC CE is completely received, or ii) from when HARQ-ACK information for the first DCI or the second DCI or the MAC CE is transmitted, or iii) from when a subsequent SPS period starts after receiving the first DCI or the second DCI or the MAC CE.

FIG. 14 is a diagram illustrating an operation of a base station for a method for transmitting and receiving a semi-persistent scheduling PDSCH according to an embodiment of the present disclosure.

Referring to FIG. 14, FIG. 14 exemplifies an operation of a base station based on the proposed methods (e.g., Embodiments 1 to 8 and a combination of one or more proposed methods in Embodiments 1 to 8). FIG. 14 is only for convenience of description, but it is not intended to limit a scope of the present disclosure. Some step(s) shown in FIG. 14 may be omitted according to situations and/or configurations, etc. In addition, a base station in FIG. 14 is only one example, and may be implemented as an apparatus illustrated in FIG. 13. For example, a processor (102/202) of FIG. 15 may control to transmit and receive channel/signal/data/information, etc. by using a transceiver (106/206), and control to store transmitted or received channel/signal/data/information in a memory (104/204).

In addition, an operation of FIG. 14 may be processed by one or more processors (102, 202) of FIG. 15. In addition, an operation of FIG. 14 may be stored in a memory (e.g., one or more memories (104, 204) of FIG. 15) in a form of an instruction/program (e.g., instruction, executable code) for driving at least one processor (e.g., 102, 202) of FIG. 15.

A base station transmits respective configuration information related to one or more semi-persistent scheduling (SPS) configurations (through/using TRP 1 (and/or TRP 2)) to a UE (S1401).

The configuration information related the SPS configuration may include configuration information related to an SPS configuration described in the above-described proposed methods (e.g., Embodiments 1 to 8 and a combination of one or more proposed methods in Embodiments 1 to 8). For example, one or more SPS configurations may be configured for a UE, and respective configuration information (e.g., SPS-Config IE) for each of one or more SPS configurations may include information/parameters exemplified in Table 6 above.

In addition, for example, respective configuration information for each SPS configuration according to the above-described Embodiment may include information on a logical channel associated with the corresponding SPS configuration.

A base station transmits downlink control information (through/using TRP 1 (and/or TRP 2)) to a UE (S1402).

Here, downlink control information (DCI) may be transmitted through a PDCCH and may be used to trigger activation/release of a specific SPS configuration among one or more SPS configurations configured for a UE. In addition, DCI may provide additional information to resource allocation information provided in the configuration information (e.g., SPS-Config IE). In addition, DCI may include resource allocation information for an SPS PDSCH for retransmission when retransmission of the SPS PDSCH for an activated SPS configuration is requested from a UE.

In addition, one or more SPS configurations may be activated for a UE, and in this case, a base station may transmit respective activation DCI for one or more SPS configurations to a UE.

Meanwhile, although not shown in FIG. 14, a base station may transmit information related to a resource to which an SPS PDSCH for one or more SPS configurations is next transmitted (via/using TRP 1 (and/or TRP 2)) to a UE.

Here, information related to a resource to which an SPS PDSCH for one or more SPS configurations is next transmitted may be provided to a UE by being included in DCI (hereinafter, first DCI) of the step S1402, or may be provided to a UE by being included in DCI (hereinafter referred to as second DCI) separate from the first DCI of step S1402 or a MAC CE.

The information related to a resource to which the SPS PDSCH is next transmitted may be indicated in units of slots or symbols. For example, the information related to a resource in which the SPS PDSCH is next transmitted may indicate a slot or symbol of a resource in which the SPS PDSCH starts or an offset value from a slot or symbol in a resource in which the SPS PDSCH starts.

Meanwhile, although not shown in FIG. 14, a base station may receive uplink control information (UCI) from a UE. Here, uplink control information (UCI) may include pose information of a UE and/or a change indicator of pose information. In this case, the information related to a resource through which the SPS PDSCH is next transmitted may be applied to the one or more SPS configurations associated with the UCI.

Here, the UCI may be transmitted through a CG PUSCH for a specific CG configuration associated with transmission of the UCI. In this case, the CG PUSCH for the specific CG configuration may include only data for a specific logical channel mapped to the specific CG configuration, and the UCI may be piggybacked and transmitted to the CG PUSCH for the specific CG configuration. Alternatively, the UCI may be transmitted through a PUCCH based on an SR associated with the UCI.

A base station transmits an SPS PDSCH (through/using TRP 1 (and/or TRP 2)) to a UE (S1403).

Here, as described above, if the information related to a resource to which the SPS PDSCH for the one or more SPS configurations is next transmitted is provided to a UE, a base station may not transmit the SPS PDSCH until before a resource determined by the information related to a resource to which the SPS PDSCH is next transmitted. In addition, the base station can transmit the SPS PDSCH from a resource determined by the information related to a resource to which the SPS PDSCH is next transmitted.

In addition, the information related to a resource to which the SPS PDSCH is next transmitted may be applied i) from when the first DCI or the second DCI or the MAC CE is completely received, or ii) from when HARQ-ACK information for the first DCI or the second DCI or the MAC CE is transmitted, or iii) from when a subsequent SPS period starts after receiving the first DCI or the second DCI or the MAC CE.

General Device to which the Present Disclosure may be applied

FIG. 15 is a diagram which illustrates a block diagram of a wireless communication device according to an embodiment of the present disclosure.

In reference to FIG. 15, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs (Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method performed by a user equipment (UE) in a wireless communication system, the method comprising:

   receiving, from a base station, respective configuration information related to one or more semi-persistent scheduling (SPS) configurations;
   receiving, from the base station, respective downlink control information (DCI) for activating the one or more SPS configurations; and
   receiving an SPS physical downlink shared channel (PDSCH) from a resource determined by information related to a resource in which the SPS PDSCH for the one or more SPS configurations is next transmitted,
   wherein the UE does not receive the SPS PDSCH until before a resource determined by the information related to a resource to which the SPS PDSCH is next transmitted.

2. The method of claim 1, wherein the information related to a resource to which the SPS PDSCH is next transmitted is indicated in units of slots or symbols.

3. The method of claim 1, wherein the information related to a resource to which the SPS PDSCH is next transmitted indicates a slot or symbol of a resource in which the SPS PDSCH starts or indicates an offset value from a slot or symbol of a resource in which the SPS PDSCH starts.

4.  The method of claim 1, wherein the information related to a resource to which the SPS PDSCH is next transmitted is transmitted through the DCI or second DCI different from the DCI or a medium access control (MAC) control element (CE).

5.  The method of claim 4, wherein the information related to a resource to which the SPS PDSCH is next transmitted is applied i) from a time when reception of the DCI or the second DCI or the MAC CE is completed, or ii) from a time of transmission of hybrid automatic repeat request (HARQ)-acknowledgement (ACK) information for the DCI or the second DCI or the MAC CE, or iii) from a time when a subsequent SPS period starts after receiving the DCI or the second DCI or the MAC CE.

6.  The method of claim 1, further comprising:
    transmitting uplink control information (UCI) to the base station.

7.  The method of claim 6, wherein the information related to a resource to which the SPS PDSCH is next transmitted is applied to the one or more SPS configurations associated with the UCI.

8.  The method of claim 6, wherein the UCI is transmitted through a configured grant (CG) physical uplink shared channel (PUSCH) for a specific CG configuration associated with transmission of the UCI.

9.  The method of claim 8, wherein the CG PUSCH for the specific CG configuration includes only data for a specific logical channel mapped to the specific CG configuration, and the UCI is piggybacked to the CG PUSCH for the specific CG configuration.

10. The method of claim 6, wherein the UCI is transmitted through a physical uplink control channel (PUCCH) based on a scheduling request (SR) associated with the UCI.

11. A user equipment (UE) operating in a wireless communication system, the UE comprising:

    at least one transceiver for transmitting and receiving a wireless signal; and
    at least one processor for controlling the at least one transceiver,
    wherein the at least one processor configured to:

        receive, from a base station, respective configuration information related to one or more semi-persistent scheduling (SPS) configurations;
        receive, from the base station, respective downlink control information (DCI) for activating the one or more SPS configurations; and
        receive an SPS physical downlink shared channel (PDSCH) from a resource determined by information related to a resource in which the SPS PDSCH for the one or more SPS configurations is next transmitted, wherein the UE does not receive the SPS PDSCH until before a resource determined by the information related to a resource to which the SPS PDSCH is next transmitted.

12. At least one non-transitory computer-readable medium storing at least one instruction, wherein the at least one instruction executable by at least one processor controls a user equipment (UE) to:

        receive, from a base station, respective configuration information related to one or more semi-persistent scheduling (SPS) configurations;
        receive, from the base station, respective downlink control information (DCI) for activating the one or more SPS configurations; and
        receive an SPS physical downlink shared channel (PDSCH) from a resource determined by information related to a resource in which the SPS PDSCH for the one or more SPS configurations is next transmitted, wherein the UE does not receive the SPS PDSCH until before a resource determined by the information related to a resource to which the SPS PDSCH is next transmitted.

13. A processing apparatus configured to control a user equipment (UE) in a wireless communication system, the processing apparatus comprising:

        at least one processor; and
        at least one computer memory operably connected to the at least one processor and storing instructions that, based on being executed by the at least one processor, perform operations comprising:

> receiving, from a base station, respective configuration information related to one or more semi-persistent scheduling (SPS) configurations;
> receiving, from the base station, respective downlink control information (DCI) for activating the one or more SPS configurations; and
> receiving an SPS physical downlink shared channel (PDSCH) from a resource determined by information related to a resource in which the SPS PDSCH for the one or more SPS configurations is next transmitted, wherein the UE does not receive the SPS PDSCH until before a resource determined by the information related to a resource to which the SPS PDSCH is next transmitted.

14. A method performed by a base station in a wireless communication system, the method comprising:

> transmitting, to a user equipment (UE), respective configuration information related to one or more semi-persistent scheduling (SPS) configurations;
> transmitting, to the UE, respective downlink control information (DCI) for activating the one or more SPS configurations; and
> transmitting an SPS physical downlink shared channel (PDSCH) from a resource determined by information related to a resource in which the SPS PDSCH for the one or more SPS configurations is next transmitted, wherein the base station does not transmit the SPS PDSCH until before a resource determined by the information related to a resource to which the SPS PDSCH is next transmitted.

15. A base station operating in a wireless communication system, the base station comprising:

> at least one transceiver for transmitting and receiving a wireless signal; and
> at least one processor for controlling the at least one transceiver,
> wherein the at least one processor configured to:

> transmit, to a user equipment (UE), respective configuration information related to one or more semi-persistent scheduling (SPS) configurations;
> transmit, to the UE, respective downlink control information (DCI) for activating the one or more SPS configurations; and
> transmit an SPS physical downlink shared channel (PDSCH) from a resource determined by information related to a resource in which the SPS PDSCH for the one or more SPS configurations is next transmitted, wherein the base station does not transmit the SPS PDSCH until before a resource determined by the information related to a resource to which the SPS PDSCH is next transmitted.

## FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

# FIG.4

# FIG.5

Resource grid

A carrier
(up to 3300 subcarriers, i.e., 275 RBs)

A BWP

1 RB=12 subcarrier

1 RE

1 subcarrier

1 Symbol

k=0

l=0 ......

FIG.6

EP 4 518 507 A1

# FIG.7

(a)

(b)

EP 4 518 507 A1

# FIG.8

## FIG.9

SPS1 period = (16 or 17ms) X N

DL

DCI

PDSCH1 TB1 | PDSCH1 TB2

PDSCH1 or 2 TB2

SPS2 period = 16 or 17ms

PDSCH2 TB

PDSCH2 TB

······

PDSCH1 TB1 | PDSCH1 TB2

PDSCH1 or 2 TB2

Activate SPS PDSCH1 & SPS PDSCH2 by DCI

TB1 & TB2 for I-frame

TB for P-frame

TB for P-frame

TB1 & TB2 for I-frame

Time

UL

UCI

PUCCH

PUCCH

PUCCH

······

PUCCH

Pose information

ACKs to TB1 and TB1

ACK to TB

ACK to TB

ACKs to TB1 and TB1

Time

EP 4 518 507 A1

# FIG.10

# FIG.11

EP 4 518 507 A1

Interval = 16 or 17ms          Interval = 16 or 17ms

DL

DCI | Offset | PDSCH1 TB1 | PDSCH2 TB2 | PDSCH3 TB3 | ...... | PDSCH N TB_N

DCI scheduling
multi-TB for
multi-slot

TB1 & TB2 for
I-frame

TB for P-frame          TB for P-frame

UL

UCI          PUUCH          PUUCH          PUUCH          ......          PUUCH

Pose information          ACK to TB1          ACK to TB2          ACK to TB3          ACK to TB_N

## FIG.12

Network                  UE

Configuration information      S1201

Downlink control information      S1202

Semi-persistent scheduling PDSCH      S1203

## FIG.13

| Receive respective configuration information related to one or more semi-persistent scheduling configurations | S1301 |

| Receive downlink control information | S1302 |

| Receive a semi-persistent scheduling PDSCH | S1303 |

## FIG.14

| Transmit respective configuration information related to one or more semi-persistent scheduling configurations | S1401 |

| Transmit downlink control information | S1402 |

| Transmit a semi-persistent scheduling PDSCH | S1403 |

# FIG.15

EP 4 518 507 A1

<table>
<tr><td colspan="2" align="center">**INTERNATIONAL SEARCH REPORT**</td><td colspan="2">International application No.<br>**PCT/KR2023/005843**</td></tr>
<tr><td colspan="4">**A.**    **CLASSIFICATION OF SUBJECT MATTER**<br>**H04W 72/12**(2009.01)i; **H04W 72/11**(2023.01)i; **H04W 72/21**(2023.01)i; **H04W 72/231**(2023.01)i; **H04W 72/232**(2023.01)i;<br>**H04W 72/04**(2009.01)i; **H04L 1/18**(2006.01)i<br><br>According to International Patent Classification (IPC) or to both national classification and IPC</td></tr>
<tr><td colspan="4">**B.**    **FIELDS SEARCHED**</td></tr>
<tr><td colspan="4">Minimum documentation searched (classification system followed by classification symbols)<br>    H04W 72/12(2009.01); H04L 1/18(2006.01)</td></tr>
<tr><td colspan="4">Documentation searched other than minimum documentation to the extent that such documents are included in the fields searched<br>        Korean utility models and applications for utility models: IPC as above<br>        Japanese utility models and applications for utility models: IPC as above</td></tr>
<tr><td colspan="4">Electronic data base consulted during the international search (name of data base and, where practicable, search terms used)<br>        eKOMPASS (KIPO internal) & keywords: SPS configuration, DCI, SPS PDSCH, resource, HARQ-ACK, MAC CE, UCI</td></tr>
<tr><td colspan="4">**C.**    **DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">US 2022-0061074 A1 (OFINNO, LLC) 24 February 2022 (2022-02-24)<br>    See paragraphs [0496]-[0497]; and claims 1 and 3.</td><td>1-15</td></tr>
<tr><td>A</td><td colspan="2">US 2022-0094484 A1 (BABAEI, Alireza) 24 March 2022 (2022-03-24)<br>    See paragraphs [0372]-[0383]; and claim 21.</td><td>1-15</td></tr>
<tr><td>A</td><td colspan="2">WO 2022-032032 A1 (QUALCOMM INCORPORATED) 10 February 2022 (2022-02-10)<br>    See paragraphs [0125]-[0128]; claim 1; and figure 11.</td><td>1-15</td></tr>
<tr><td>A</td><td colspan="2">MODERATOR (NOKIA). [108-e-NR-CRs-02] Issue#3 SPS PDSCH activation and PUCCH resource selection for the 1st SPS PDSCH. R1-2202833, 3GPP TSG RAN WG1 #108-e, e-Meeting. 06 March 2022.<br>    See sections 3-3.4.</td><td>1-15</td></tr>
<tr><td>A</td><td colspan="2">MODERATOR (LG ELECTRONICS). Summary #2 of PDSCH/PUSCH enhancements (Scheduling/ HARQ). R1-2202679, 3GPP TSG RAN WG1 #108-e, e-Meeting. 02 March 2022.<br>    See sections 2-2.3.</td><td>1-15</td></tr>
</table>

☐ Further documents are listed in the continuation of Box C.        ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br><br>**02 August 2023** | Date of mailing of the international search report<br><br>**09 August 2023** |
| Name and mailing address of the ISA/KR<br><br>**Korean Intellectual Property Office**<br>**Government Complex-Daejeon Building 4, 189 Cheongsa-**<br>**ro, Seo-gu, Daejeon 35208** | Authorized officer |
| Facsimile No. **+82-42-481-8578** | Telephone No. |

Form PCT/ISA/210 (second sheet) (July 2022)

<table>
<tr><td colspan="4" align="center">INTERNATIONAL SEARCH REPORT<br>Information on patent family members</td><td colspan="2">International application No.<br><br>**PCT/KR2023/005843**</td></tr>
</table>

| Patent document cited in search report | | | Publication date (day/month/year) | Patent family member(s) | | | Publication date (day/month/year) |
|---|---|---|---|---|---|---|---|
| US | 2022-0061074 | A1 | 24 February 2022 | CN | 114128184 | A | 01 March 2022 |
| | | | | EP | 3963775 | A1 | 09 March 2022 |
| | | | | JP | 2022-531228 | A | 06 July 2022 |
| | | | | KR | 10-2022-0015401 | A | 08 February 2022 |
| | | | | WO | 2020-223195 | A1 | 05 November 2020 |
| US | 2022-0094484 | A1 | 24 March 2022 | US | 11405147 | B2 | 02 August 2022 |
| | | | | US | 2022-0321277 | A1 | 06 October 2022 |
| | | | | WO | 2022-061249 | A1 | 24 March 2022 |
| WO | 2022-032032 | A1 | 10 February 2022 | CN | 116158177 | A | 23 May 2023 |
| | | | | EP | 4193528 | A1 | 14 June 2023 |

Form PCT/ISA/210 (patent family annex) (July 2022)